# EUROPEAN PATENT SPECIFICATION

(11) **EP 2 858 443 B1**
(45) Date of publication and mention of the grant of the patent: **10.05.2017**
(21) Application number: 13878758.5
(22) Date of filing: 21.03.2013
(51) Int. Cl.: H04L 5/00, H04W 72/04

(54) **DATA TRANSMISSION METHOD, BASE STATION, AND USER EQUIPMENT**
DATENÜBERTRAGUNGSVERFAHREN, BASISSTATION UND BENUTZERVORRICHTUNG
PROCÉDÉ DE TRANSMISSION DE DONNÉES, STATION DE BASE, ET ÉQUIPEMENT D'UTILISATEUR

(43) Date of publication of application: 08.04.2015
(73) Proprietor: Huawei Device Co., Ltd., Shenzhen, Guangdong 518129 (CN)
(72) Inventor: WANG, Jian, Shenzhen Guangdong 518129 (CN); GUAN, Lei, Shenzhen Guangdong 518129 (CN)
(74) Representative: Thun, Clemens
(86) International application number: PCT/CN2013/073005
(87) International publication number: WO 2014/146280

(56) References cited:
- EP-A1- 2 315 369
- WO-A2-2009/099295
- CN-A- 101 640 579
- CN-A- 101 651 515
- CN-A- 102 196 570
- US-A1- 2010 074 130
- US-A1- 2010 303 016
- ZTE: "Discussion on TBS scaling factor for additional TDD special subframe configurations", 3GPP DRAFT; R1-122116 DISCUSSION ON TBS SCALING FACTOR FOR ADDITIONAL TDD SPECIAL SUBFRAME CONFIGURATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050600394, [retrieved on 2012-05-12]

## Description

### TECHNICAL FIELD

Embodiments of the present invention relate to the field of communications technologies, and in particular, to a data transmission method, a base station, and a user equipment.

### BACKGROUND

In systems of Long Term Evolution Release 8 (Long Term Evolution Release.8 REL.8, LTE REL.8 for short) to LTE REL.11, a state of a channel from a base station to a user equipment (User Equipment, UE for short) determines throughput from the base station to the UE. In a good channel state, the base station can transmit data to the UE by adopting a high modulation and coding scheme (Modulation and Coding Scheme, MCS for short) level, and system throughput is also relatively high. In a poor channel state, in order to control a bit error rate during a data transmission process, the base station can transmit data to the UE by adopting a low MCS level, and the base station determines, according to a channel state fed back by the UE, a coding rate and an MCS level adopted to transmit data to the UE on the channel. In order to achieve a purpose of transmitting the data to the UE at this coding rate, the base station needs to determine a transport block size that delivered service data needs to occupy. When determining the transport block size, the base station usually determines, in a transport block size table (Transport block size table, TBS table for short) according to the determined MCS level and a frequency resource scheduled by the system, the transport block size for bearing the service data delivered by the base station to the UE.

In the prior art, for LTEREL.12, the base station transmits data to the UE by adopting a transport block determined according to an existing TBS table. However, a system overhead of an LTE REL.12 system becomes smaller compared with system overheads of systems of LTE REL.8 to LTE REL.11, which results in a decrease in an actual effective coding rate during a transmission process, thereby affecting throughput of the LTE REL.12 system.

In the document WO 2009/099295 A2, a method of determining a transport block size (TBS) allocated to a data packet transmitted via a wireless channel is provided. The TBS is determined according to the number of resource blocks (resource block number) IxIRB allocated to the data packet and a modulation coding scheme (MCS) level. A part or all of the TBSs allocated to a specific resource block number is determined to have the same value as a part or all of the TBSs allocated to another resource block number.

In the document EP 2 315 369 A1, an adaptive modulation and coding method is provided, including: selecting punctured Physical Resource Blocks (PRBs) to transmit the downlink data for the User Equipment (UE); determining the Transport Block Size (TBS) and the number of punctured PRB pairs for transmission to the UE based on the carried service; scheduling the downlink data for the UE based on the determined TBS, and transmitting the number of the used punctured PRB pairs and a Modulation and Coding Scheme (MCS) sequence number to the UE; and the UE converting the number of the punctured PRB pairs to the number of normal PRB pairs, determining the modulation scheme and the TBS sequence number based on the MCS sequence number, and determining the TBS of the downlink data based on the number of the normal PRB pairs and the TBS sequence number. The specific condition when downlink data are transmitted with punctured PRBs may be performed in this document on the basis of utilizing the existing resources and adaptive processing of the general subframes by performing conversion between the number of punctured PRBs and the number of normal PRBs in scheduling resource for the UE with the NodeB, which may be implemented simply and efficiently.

### SUMMARY

Embodiments of the present invention aims at providing a data transmission method, a base station, and a user equipment, to solve a problem that an effective coding rate is reduced and that system throughput is affected because a base station transmits data to a UE by using a transport block that is determined according to an existing TBS table.

According to a first aspect, an embodiment of the present invention provides a data transmission method, where the method includes:
determining, by a base station, a modulation and coding scheme level;
determining, by the base station, a time-frequency resource, and determining the number of first physical resource block pairs according to the time-frequency resource;
selecting, by the base station and from a transport block size table, a transport block size TBS corresponding to the modulation and coding scheme level and corresponding to the number of the first physical resource block pairs or the number of second physical resource block pairs, where the number of the second physical resource block pairs is a product of the number of the first physical resource block pairs and a set conversion factor;
sending, by the base station, service data to a user equipment by adopting the selected TBS; and
sending, by the base station, a system scheduling control signal to the user equipment, where the system scheduling control signal includes the modulation and coding scheme level and the time-frequency resource;
wherein the selecting, by the base station and from a transport block size table, a transport block size TBS corresponding to the modulation and coding scheme level and corresponding to the number of the first physical resource block pairs or the number of second physical resource block pairs, includes:
   selecting, by the base station according to a system configuration parameter or a system overhead size, the TBS corresponding to the modulation and coding scheme level and corresponding to the number of the first physical resource block pairs, or, selecting the TBS corresponding to the modulation and coding scheme level and corresponding to the number of the second physical resource block pairs.

With reference to the first aspect, in a first possible implementation manner of the first aspect, the method further includes:
sending, by the base station, a higher-layer signaling message to the user equipment, where the higher-layer signaling message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

With reference to the first aspect, in a second possible implementation manner of the first aspect, the method further includes:
sending, by the base station, a downlink control message to the user equipment, where the downlink control message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

With reference to the first aspect, the first possible implementation manner of the first aspect, and the second possible implementation manner of the first aspect, in a third possible implementation manner of the first aspect, the set conversion factors include a first set conversion factor corresponding to a first modulation and coding scheme level and a second set conversion factor corresponding to a second modulation and coding scheme level in the transport block size table, and the first set conversion factor is different from the second set conversion factor.

With reference to the third possible implementation manner of the first aspect, in a fourth possible implementation manner of the first aspect, the first modulation and coding scheme level is a maximum modulation and coding scheme level in the transport block size table; and the second modulation and coding scheme level is a non-maximum modulation and coding scheme level in the transport block size table.

With reference to the first aspect and any one possible implementation manner of the first possible implementation manner of the first aspect, the second possible implementation manner of the first aspect, the third possible implementation manner of the first aspect, and the fourth possible implementation manner of the first aspect, in a fifth possible implementation manner of the first aspect, if the number of the second physical resource block pairs is larger than the maximum number of physical resource block pairs of the transport block size table, the TBS corresponding to the modulation and coding scheme level and corresponding to the number of the second physical resource block pairs is a TBS corresponding to the modulation and coding scheme level and corresponding to the maximum number of the physical resource block pairs.

According to a second aspect, an embodiment of the present invention provides a data transmission method, where the method includes:
receiving, by a user equipment, a system scheduling control signal sent by a base station, where the system scheduling control signal includes a modulation and coding scheme level and a time-frequency resource;
selecting, by the user equipment and from a transport block size table, a transport block size TBS corresponding to the modulation and coding scheme level and corresponding to the number of the first physical resource block pairs or corresponding to the number of second physical resource block pairs, where the number of the second physical resource block pairs is a product of the number of the first physical resource block pairs and a set conversion factor; and
receiving, by the user equipment, service data from the base station by adopting the selected TBS;
wherein the selecting, by the user equipment and from a transport block size table, a transport block size TBS corresponding to the modulation and coding scheme level and corresponding to the number of the first physical resource block pairs or corresponding to the number of second physical resource block pairs, includes:
   selecting, by the user equipment according to a system configuration parameter or a system overhead size, the TBS corresponding to the modulation and coding scheme level and corresponding to the number of the first physical resource block pairs, or, selecting the TBS corresponding to the modulation and coding scheme level and corresponding to the number of the second physical resource block pairs.

With reference to the second aspect, in a first possible implementation manner of the second aspect, the method further includes:
receiving, by the user equipment, a higher-layer signaling message sent by the base station, where the higher-layer signaling message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

With reference to the second aspect, in a second possible implementation manner of the second aspect, the method further includes:
receiving, by the user equipment, a downlink control message sent by the base station, where the downlink control message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

With reference to the second aspect, the first possible implementation manner of the second aspect, and the second possible implementation manner of the second aspect, in a third possible implementation manner of the second aspect, the set conversion factors include a first set conversion factor corresponding to a first modulation and coding scheme level and a second set conversion factor corresponding to a second modulation and coding scheme level in the transport block size table, and the first set conversion factor is different from the second set conversion factor.

With reference to the third possible implementation manner of the second aspect, in a fourth possible implementation manner of the second aspect, the first modulation and coding scheme level is a maximum modulation and coding scheme level in the transport block size table; and the second modulation and coding scheme level is a non-maximum modulation and coding scheme level in the transport block size table.

With reference to the second aspect and any one possible implementation manner of the first possible implementation manner of the second aspect, the second possible implementation manner of the second aspect, the third possible implementation manner of the second aspect, and the fourth possible implementation manner of the second aspect, in a fifth possible implementation manner of the second aspect, if the number of the second physical resource block pairs is larger than the maximum number of physical resource block pairs of the transport block size table, the TBS corresponding to the modulation and coding scheme level and corresponding to the number of the second physical resource block pairs is a TBS corresponding to the modulation and coding scheme level and corresponding to the maximum number of the physical resource block pairs.

According to a third aspect, an embodiment of the present invention provides a base station, where the base station includes:
a processor, configured to determine a modulation and coding scheme level; determine a time-frequency resource, and determine the number of first physical resource block pairs according to the time-frequency resource; and select, from a transport block size table, a transport block size TBS corresponding to the modulation and coding scheme level and corresponding to the number of the first physical resource block pairs or the number of second physical resource block pairs, where the number of the second physical resource block pairs is a product of the number of the first physical resource block pairs and a set conversion factor; and
a transmitter, configured to send service data to a user equipment by adopting the selected TBS; and send a system scheduling control signal to the user equipment, where the system scheduling control signal includes the modulation and coding scheme level and the time-frequency resource;
wherein the processor is further configured to select, according to a system configuration parameter or a system overhead size, the TBS corresponding to the modulation and coding scheme level and corresponding to the number of the first physical resource block pairs, or, select the TBS corresponding to the modulation and coding scheme level and corresponding to the number of the second physical resource block pairs.

With reference to the third aspect, in a first possible implementation manner of the third aspect, the transmitter is further configured to send a higher-layer signaling message to the user equipment, where the higher-layer signaling message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

With reference to the third aspect, in a second possible implementation manner of the third aspect, the transmitter is further configured to send a downlink control message to the user equipment, where the downlink control message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

With reference to the third aspect, the first possible implementation manner of the third aspect, and the second possible implementation manner of the third aspect, in a third possible implementation manner of the third aspect, the set conversion factors include a first set conversion factor corresponding to a first modulation and coding scheme level and a second set conversion factor corresponding to a second modulation and coding scheme level in the transport block size table, and the first set conversion factor is different from the second set conversion factor.

With reference to the third possible implementation manner of the third aspect, in a fourth possible implementation manner of the third aspect, the first modulation and coding scheme level is a maximum modulation and coding scheme level in the transport block size table; and the second modulation and coding scheme level is a non-maximum modulation and coding scheme level in the transport block size table.

With reference to the third aspect and any one possible implementation manner of the first possible implementation manner of the third aspect, the second possible implementation manner of the third aspect, the third possible implementation manner of the third aspect, and the fourth possible implementation manner of the third aspect, in a fifth possible implementation manner of the third aspect, the processor is further configured to, when the number of the second physical resource block pairs is larger than the maximum number of physical resource block pairs of the transport block size table, determine that the TBS corresponding to the modulation and coding scheme level and corresponding to the number of the second physical resource block pairs is a TBS corresponding to the modulation and coding scheme level and corresponding to the maximum number of the physical resource block pairs.

According to a fourth aspect, an embodiment of the present invention provides a user equipment, where the user equipment includes:
a receiver, configured to receive a system scheduling control signal sent by a base station, where the system scheduling control signal includes a modulation and coding scheme level and a time-frequency resource; and
a processor, configured to select, from a transport block size table, a transport block size TBS corresponding to the modulation and coding scheme level and corresponding to the number of the first physical resource block pairs or corresponding to the number of second physical resource block pairs, where the number of the second physical resource block pairs is a product of the number of the first physical resource block pairs and a set conversion factor; and receive service data from the base station by adopting the selected TBS;
wherein the processor is further configured to select, according to a system configuration parameter or a system overhead size, the TBS corresponding to the modulation and coding scheme level and corresponding to the number of the first physical resource block pairs, or, select the TBS corresponding to the modulation and coding scheme level and corresponding to the number of the second physical resource block pairs.

With reference to the fourth aspect, in a first possible implementation manner of the fourth aspect, the receiver is further configured to receive a higher-layer signaling message sent by the base station, where the higher-layer signaling message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

With reference to the fourth aspect, in a second possible implementation manner of the fourth aspect, the receiver is further configured to receive a downlink control message sent by the base station, where the downlink control message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

With reference to the fourth aspect, the first possible implementation manner of the fourth aspect, and the second possible implementation manner of the fourth aspect, in a third possible implementation manner of the fourth aspect, the set conversion factors include a first set conversion factor corresponding to a first modulation and coding scheme level and a second set conversion factor corresponding to a second modulation and coding scheme level in the transport block size table, and the first set conversion factor is different from the second set conversion factor.

With reference to the third possible implementation manner of the fourth aspect, in a fourth possible implementation manner of the fourth aspect, the first modulation and coding scheme level is a maximum modulation and coding scheme level in the transport block size table; and the second modulation and coding scheme level is a non-maximum modulation and coding scheme level in the transport block size table.

With reference to the fourth aspect and any one possible implementation manner of the first possible implementation manner of the fourth aspect, the second possible implementation manner of the fourth aspect, the third possible implementation manner of the fourth aspect, and the fourth possible implementation manner of the fourth aspect, in a fifth possible implementation manner of the fourth aspect, the processor is further configured to, when the number of the second physical resource block pairs is larger than the maximum number of physical resource block pairs of the transport block size table, determine that the TBS corresponding to the modulation and coding scheme level and corresponding to the number of the second physical resource block pairs is a TBS corresponding to the modulation and coding scheme level and corresponding to the number maximum of the physical resource block pairs.

In the data transmission method, the base station, and the user equipment of the embodiments, the base station determines a modulation and coding scheme level and a time-frequency resource, and determines the number of first physical resource block pairs according to the time-frequency resource; selects, from a transport block size table, a transport block size TBS corresponding to the modulation and coding scheme level and corresponding to the number of the first physical resource block pairs or the number of second physical resource block pairs, where the number of the second physical resource block pairs is a product of the number of the first physical resource block pairs and a set conversion factor; sends service data to the user equipment by adopting the selected TBS; and sends a system scheduling control signal to the user equipment, where the system scheduling control signal includes the modulation and coding scheme level and the time-frequency resource. In this way, a selection of the TBS by the base station is implemented, so that an expected coding rate can be achieved when the base station transmits service data to the UE according to the selected TBS, and system throughput is improved.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show some embodiments of the present invention, and persons of ordinary skill in the art may still derive other drawings according to these accompanying drawings without creative efforts.
FIG. 1 is a method flowchart of a first embodiment of a data transmission method according to the present invention;
FIG. 2 is a method flowchart of a second embodiment of a data transmission method according to the present invention;
FIG. 3 is a schematic structural diagram of a first embodiment of a base station according to the present invention; and
FIG. 4 is a schematic structural diagram of a first embodiment of a user equipment according to of the present invention.

### DESCRIPTION OF EMBODIMENTS

To make the objectives, technical solutions, and advantages of the present invention clearer, the following clearly and completely describes the technical solutions in the present invention with reference to the accompanying drawings in the present invention. Apparently, the embodiments to be described are a part rather than all of the embodiments of the present invention. All other embodiments obtained by persons of ordinary skill in the art based on the embodiments of the present invention without creative efforts shall fall within the protection scope of the present invention.

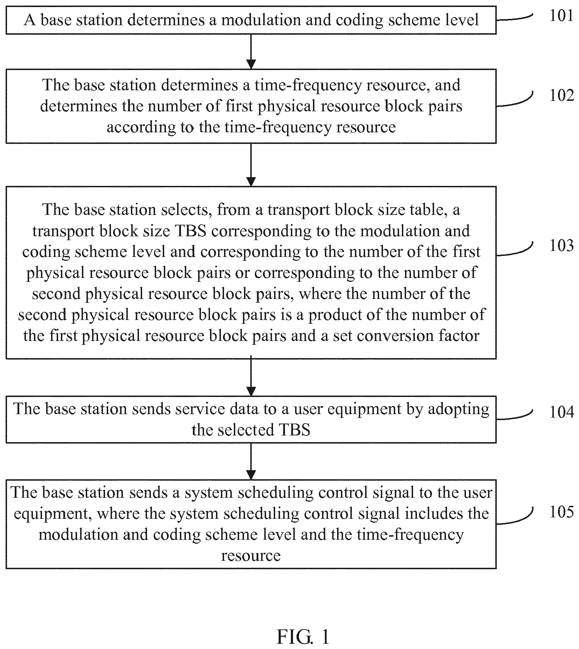

FIG. 1 is a method flowchart of a first embodiment of a data transmission method of the present invention. As shown in FIG. 1, the data transmission method of this embodiment includes:
101: A base station determines a modulation and coding scheme level.

When sending service data to a user equipment (English full name: User Equipment, UE for short), the base station needs to determine the modulation and coding scheme level (English full name: Modulation and Coding Scheme Level, MCS Level for short), so that the base station performs coding, according to the determined MCS level, on the service data to be transmitted. Specifically, the base station may determine the MCS level according to a channel state reported by the UE. When a communication channel between the base station and the UE is in a good state, the base station may determine a high MCS level as the modulation and coding scheme level to perform coding on the service data to be transmitted; and when the communication channel between the base station and the UE is in a poor state, the base station may determine a low MCS level as the modulation and coding scheme level to perform coding on the service data to be transmitted.

102: The base station determines a time-frequency resource, and determines the number of first physical resource block pairs according to the time-frequency resource.

A system may schedule the time-frequency resource for data transmission according to current time-frequency resource availability. The base station determines, according to the determined time-frequency resource, the number of physical resource block pairs (Physical Resource Block Pair, PRB pair for short) for transmitting the service data by the base station to the UE. For example, the base station determines that the number of the PRB pairs is 11, and then the base station bears the service data on the 11 PRB pairs.

103: The base station selects, from a transport block size table, a transport block size TBS corresponding to the modulation and coding scheme level and corresponding to the number of the first physical resource block pairs or the number of second physical resource block pairs, where the number of the second physical resource block pairs is a product of the number of the first physical resource block pairs and a set conversion factor.

Specifically, the base station may firstly determine, according to the determined MCS level and in a transport block size index table (Modulation and TBS index table for PDSCH), a modulation order index value and a TBS index value corresponding to the MCS level; and then select, from the transport block size table, the transport block size (Transport block size, TBS for short) corresponding to the MCS level and corresponding to the number of the first physical resource block pairs determined in step 102, where a coding rate corresponding to the TBS can match the MCS level determined by the base station.

Alternatively, the base station may firstly determine, according to the determined MCS level, in a transport block size index table (Modulation and TBS index table for PDSCH), a modulation order index value and a TBS index value corresponding to the MCS level; and then select, from the transport block size table, the TBS corresponding to the MCS level and corresponding to the number of the second physical resource block pairs, where a coding rate corresponding to the TBS can match the MCS level determined by the base station.

The number of the first physical resource block pairs is the number of the physical resource block pairs determined by the base station according to system scheduling, and the number of the second physical resource block pairs is a product of the number of the first physical resource block pairs and the set conversion factor.

104: The base station sends the service data to the user equipment by adopting the selected TBS.

Specifically, the base station modulates the service data onto the TBS determined in step 103, and sends the modulated service data to the UE.

105: The base station sends a system scheduling control signal to the user equipment, where the system scheduling control signal includes the modulation and coding scheme level and the time-frequency resource.

Specifically, the base station sends the system scheduling control signal that includes the MCS level and the time-frequency resource determined by the base station to the UE, so that the UE can correctly receive, according to the MCS level and the time-frequency resource, the service data sent by the base station to the UE. The time-frequency resource is the number of the first physical resource block pairs or the number of the second physical resource block pairs. When the base station selects the TBS corresponding to the number of the second physical resource block pairs in step 103, the time-frequency resource included in the system scheduling control signal is the number of the second physical resource block pairs. When the base station selects the TBS corresponding to the number of the first physical resource block pairs in step 103, the time-frequency resource included in the system scheduling control signal is the number of the first physical resource block pairs.

In the data transmission method of this embodiment, the base station determines a modulation and coding scheme level and a time-frequency resource, and determines the number of first physical resource block pairs according to the time-frequency resource; selects, from a transport block size table, a transport block size TBS corresponding to the modulation and coding scheme level and corresponding to the number of the first physical resource block pairs or the number of second physical resource block pairs, where the number of the second physical resource block pairs is a product of the number of the first physical resource block pairs and a set conversion factor; sends service data to a user equipment by adopting the selected TBS; and sends a system scheduling control signal to the user equipment, where the system scheduling control signal includes a modulation and coding scheme level and a time-frequency resource. In this way, a selection of the TBS by the base station is implemented, so that an expected coding rate can be achieved when the base station transmits the service data to the UE according to the selected TBS, and system throughput is improved.

Further, based on the foregoing embodiment, that the base station selects, from a transport block size table, a transport block size TBS corresponding to the modulation and coding scheme level and corresponding to the number of the first physical resource block pairs or the number of second physical resource block pairs, may specifically include that: the base station selects, according to a system configuration parameter or a system overhead size, the TBS corresponding to the modulation and coding scheme level and corresponding to the number of the first physical resource block pairs, or, selects the TBS corresponding to the modulation and coding scheme level and corresponding to the number of the second physical resource block pairs.

Specifically, the base station may select, according to the system configuration parameter, the TBS corresponding to the modulation and coding scheme level and corresponding to the number of the first physical resource block pairs, or, select the TBS corresponding to the modulation and coding scheme level and corresponding to the number of the second physical resource block pairs.

For example, when the system configuration parameter indicates that control signaling contains a physical downlink control channel, the base station selects the TBS corresponding to the modulation and coding scheme level and corresponding to the number of the first physical resource block pairs; and when the system configuration parameter indicates that the control signaling does not contain the physical downlink control channel, the base station selects the TBS corresponding to the modulation and coding scheme level and corresponding to the number of the second physical resource block pairs.

Alternatively, the base station may select, according to the system overhead size, the TBS corresponding to the modulation and coding scheme level and corresponding to the number of the first physical resource block pairs, or, select the TBS corresponding to the modulation and coding scheme level and corresponding to the number of the second physical resource block pairs.

For example, when the system overhead size is 48 resource elements, the base station selects the TBS corresponding to the modulation and coding scheme level and corresponding to the number of the first physical resource block pairs; and when the system overhead is 12 resource elements, the base station selects the TBS corresponding to the modulation and coding scheme level and corresponding to the number of the second physical resource block pairs.

Further, based on the foregoing embodiment, the data transmission method of this embodiment may further include: sending, by the base station, a higher-layer signaling message to the user equipment, where the higher-layer signaling message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

Specifically, the higher-layer signaling message sent by the base station to the UE may carry the instruction information of instructing the UE to select the TBS corresponding to the modulation and coding scheme level and corresponding to the number of the first physical resource block pairs, or, to select the TBS corresponding to the modulation and coding scheme level and corresponding to the number of the second physical resource block pairs, so that the higher-layer signaling is used to notify the UE of how to determine the TBS when receiving the service data.

Further, based on the foregoing embodiment, the data transmission method of this embodiment may further include: sending, by the base station, a downlink control message to the user equipment, where the downlink control message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs, which may increase a switching speed of the base station among different selections.

Further, the transport block size table may include: a transport block size table of layer 1 data in a Long Term Evolution Release 8 LTE REL.8 system.

Specifically, the transport block size table of layer 1 data in the LTE REL.8 may be shown in Table 1.

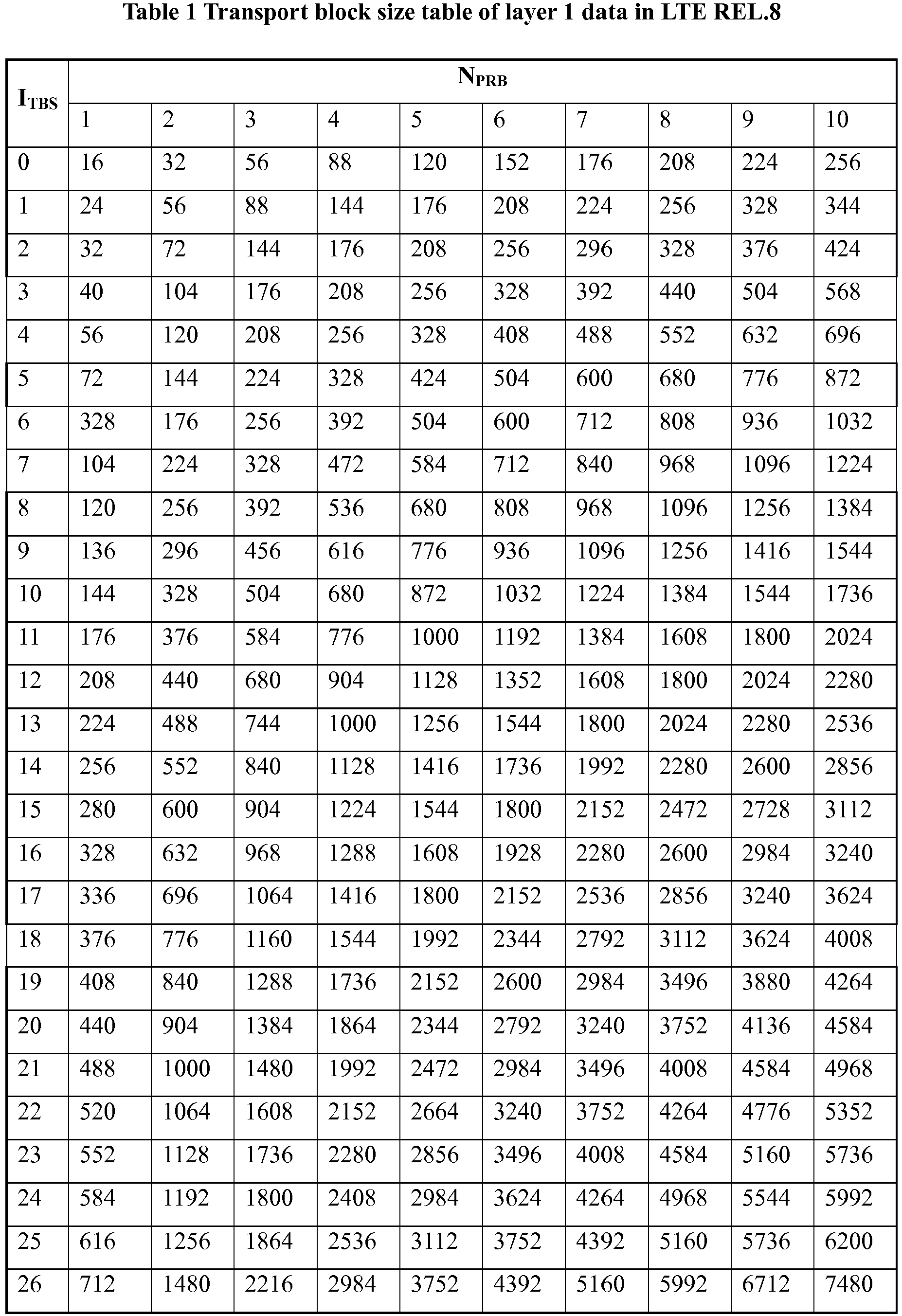

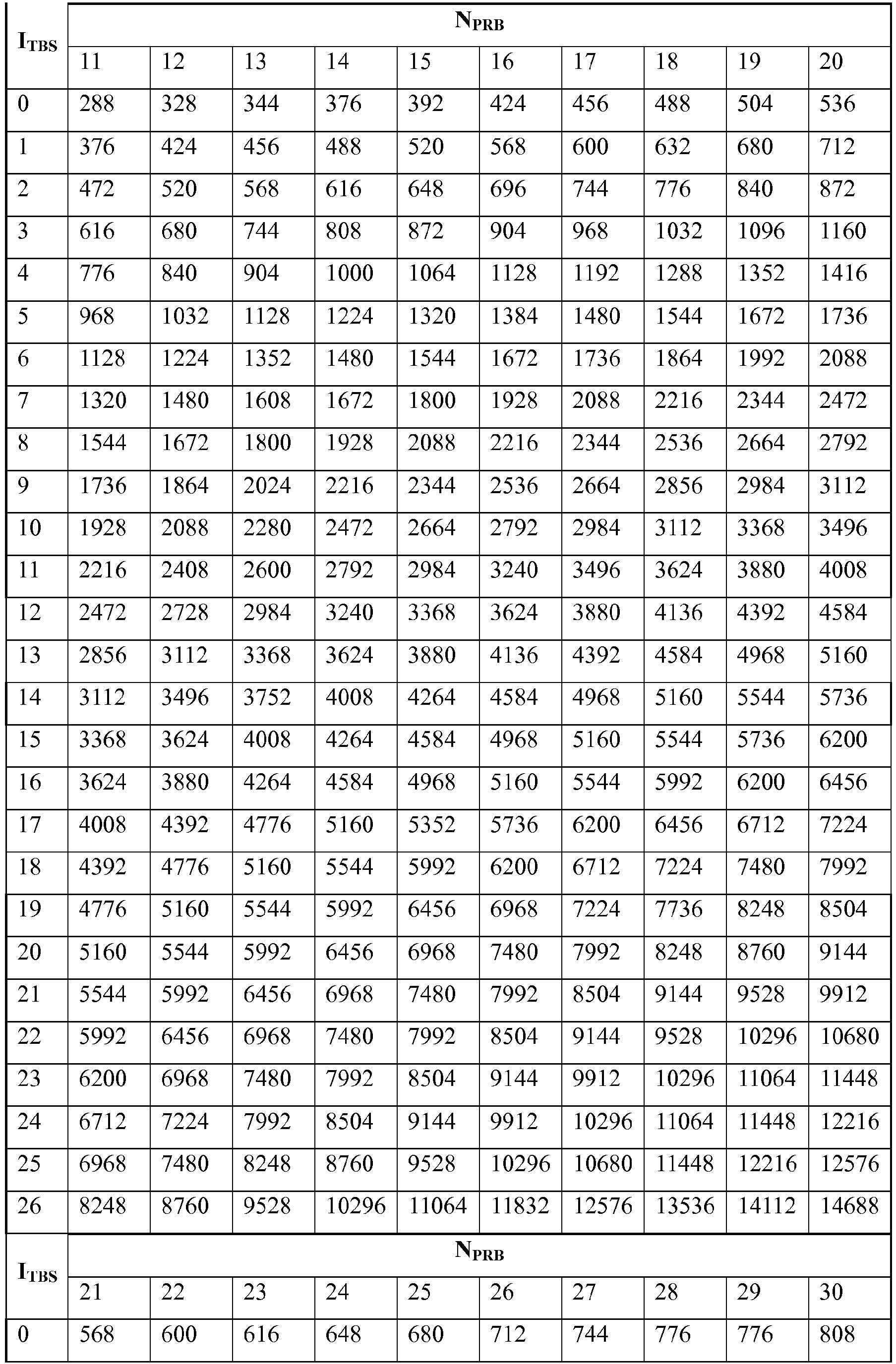

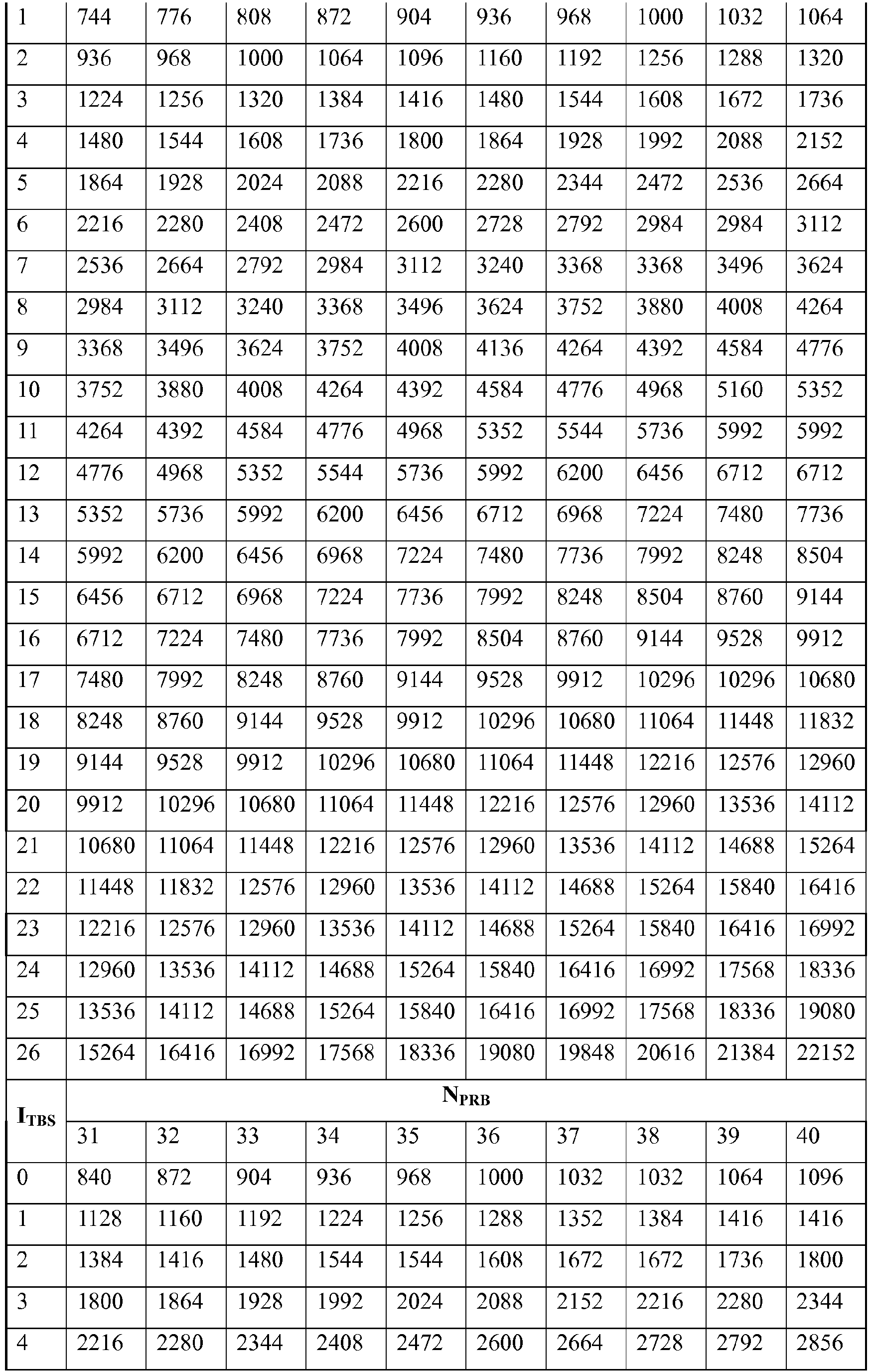

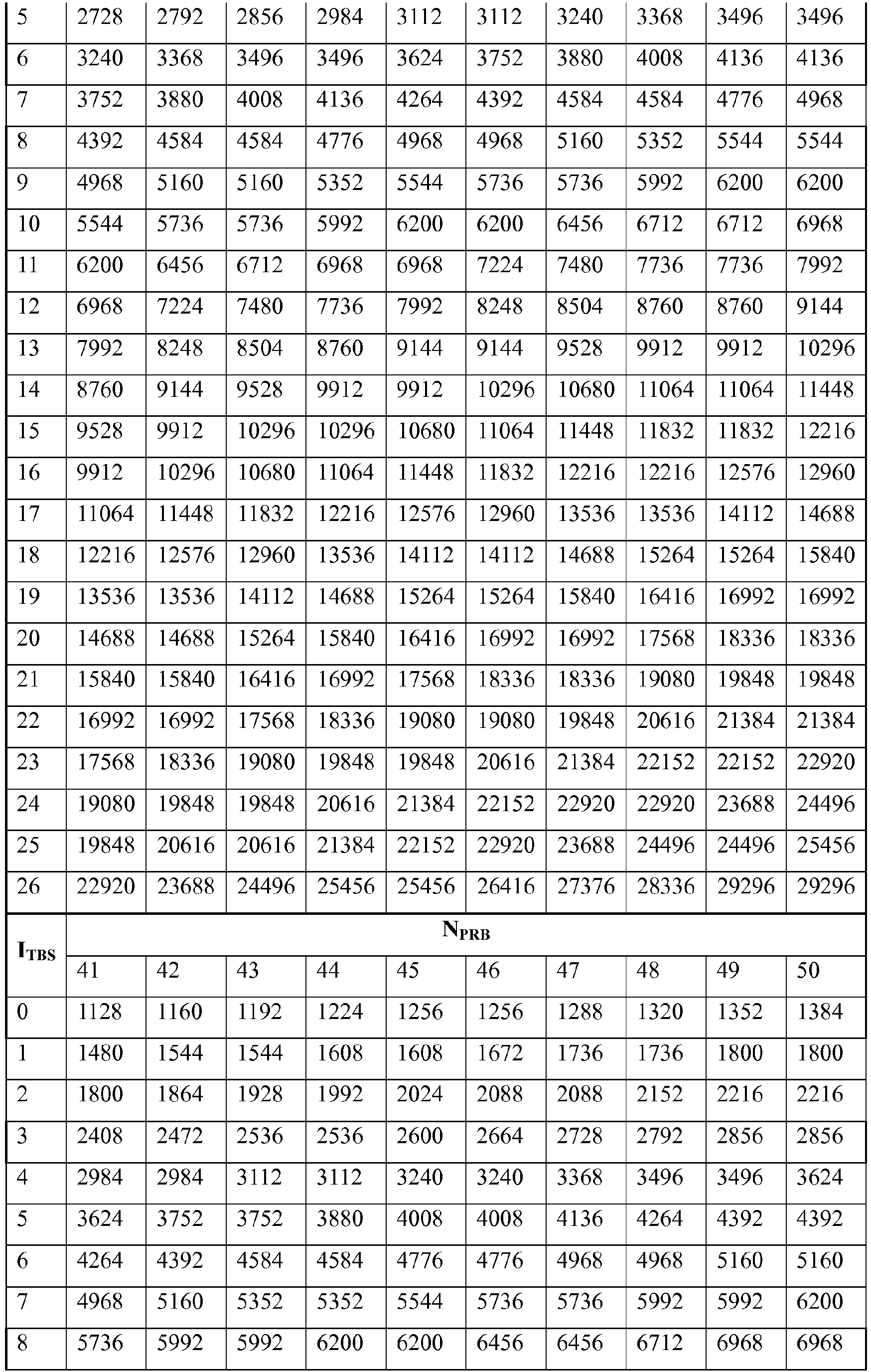

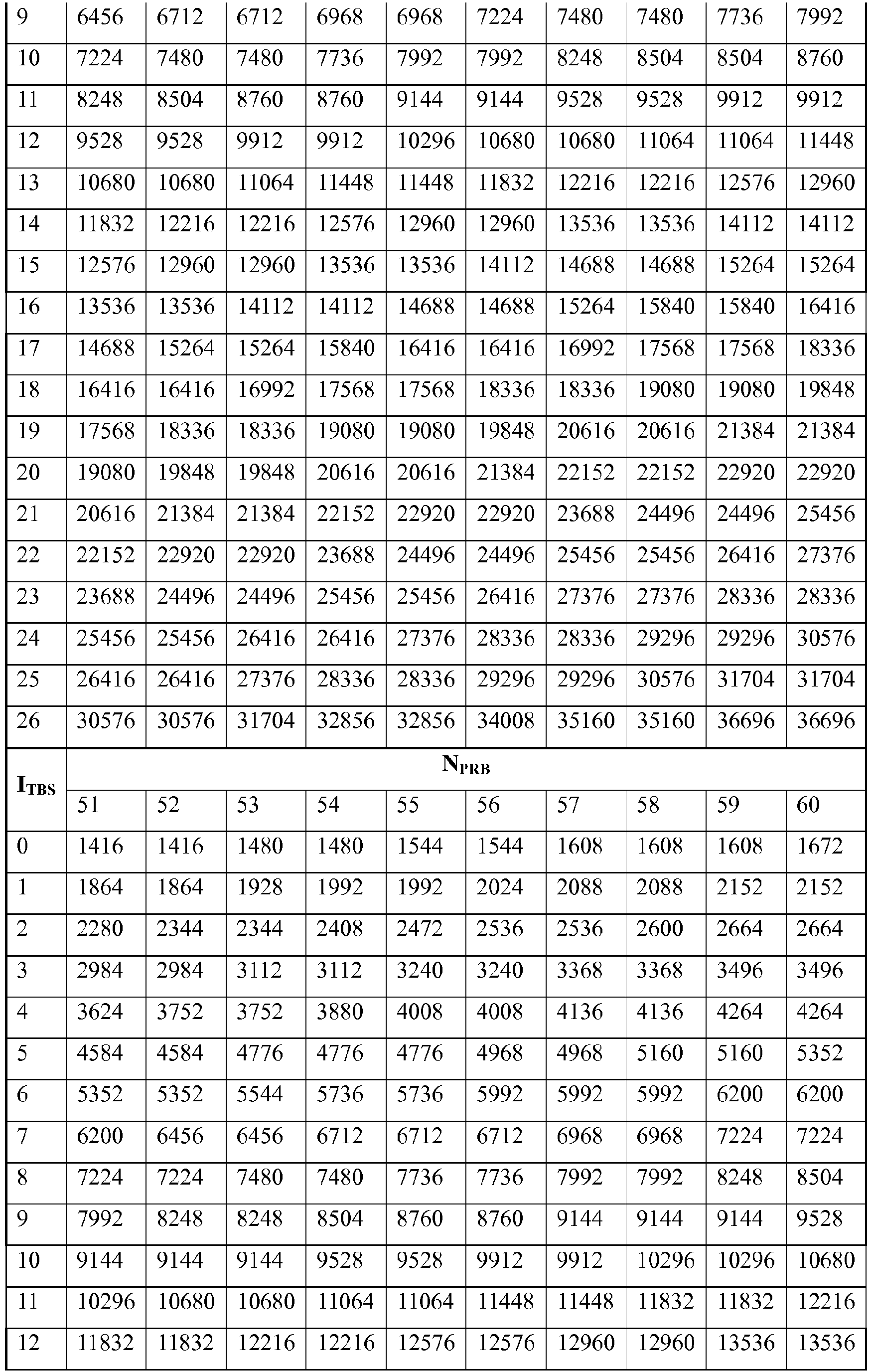

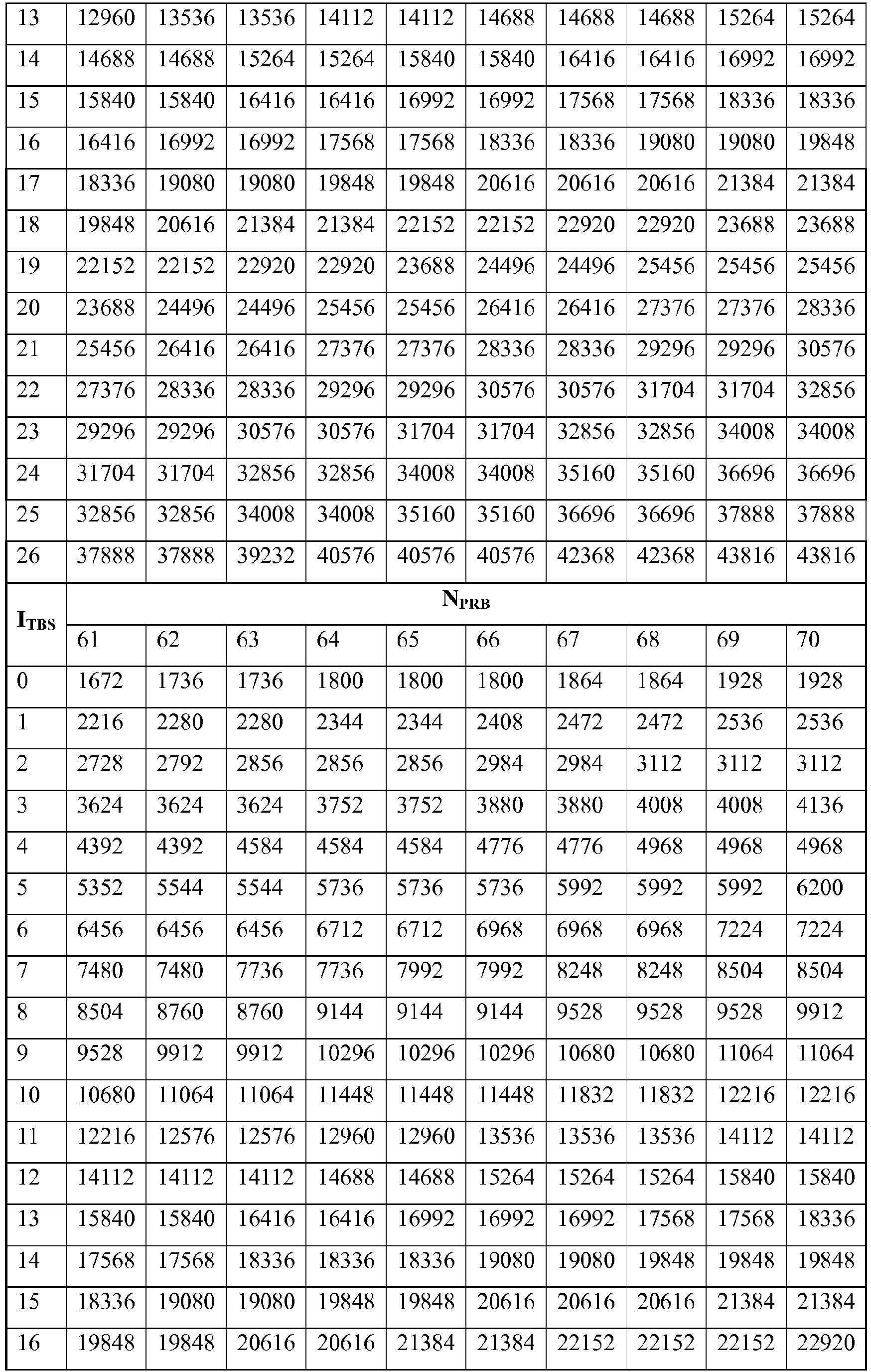

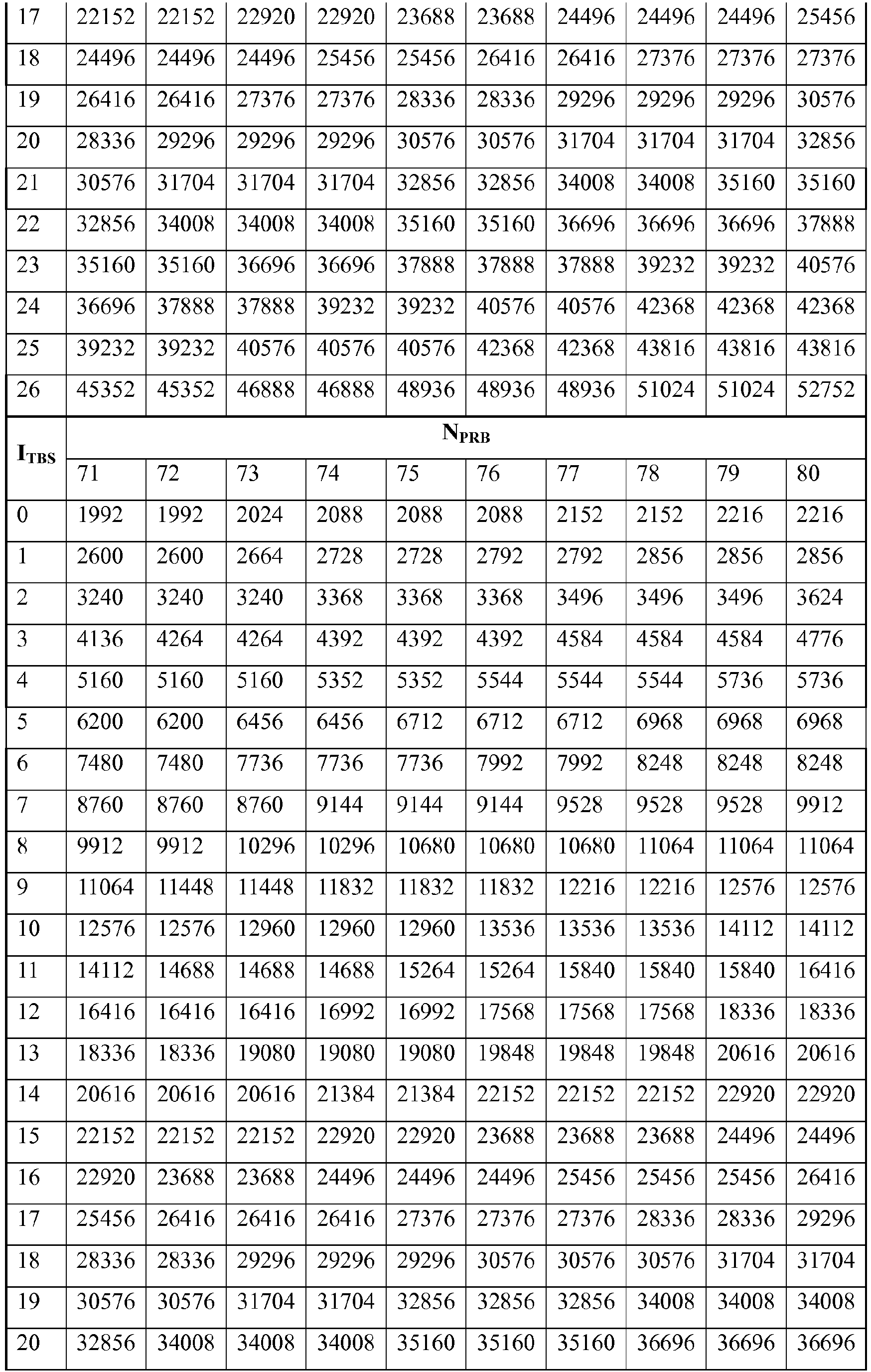

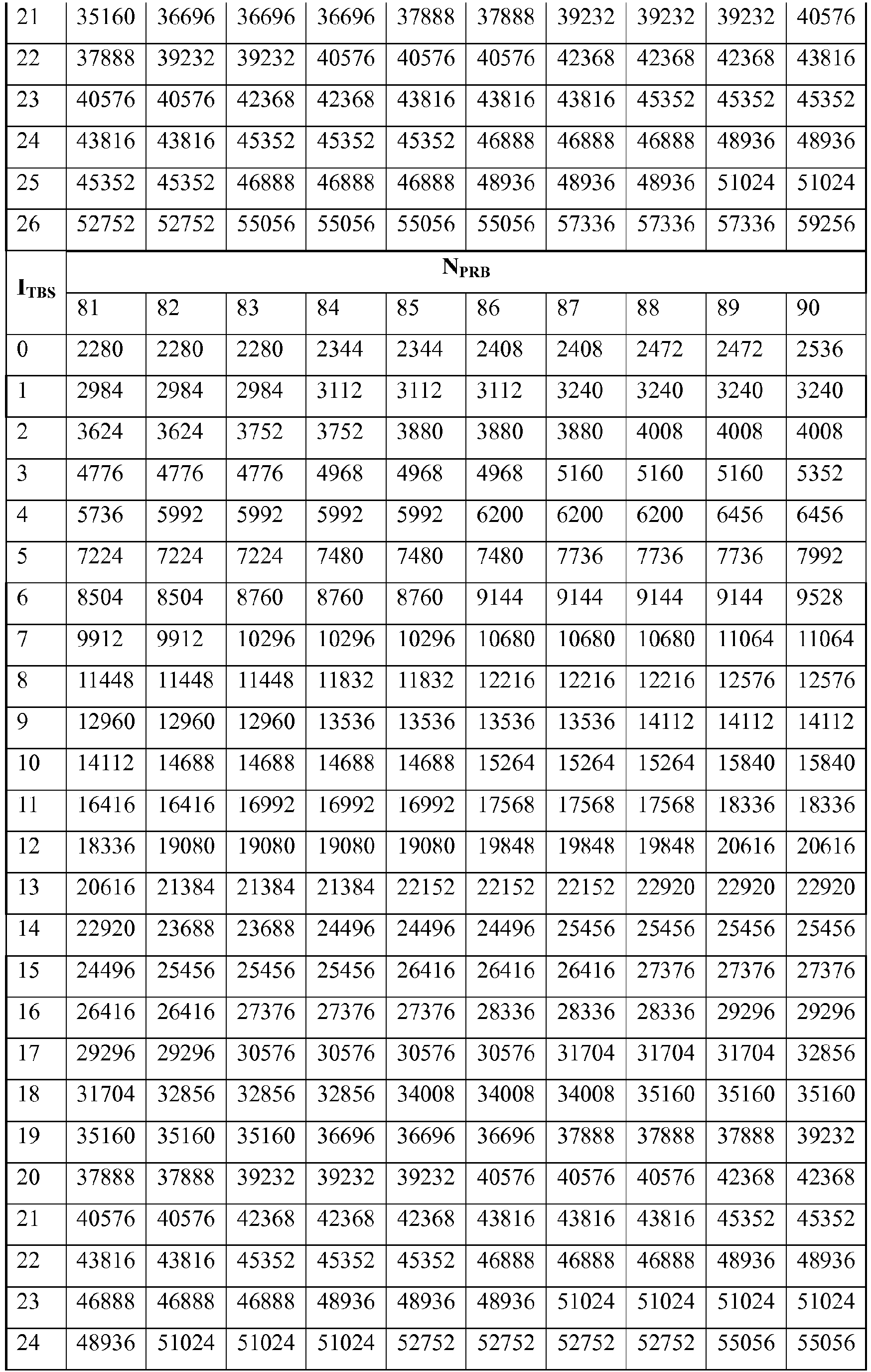

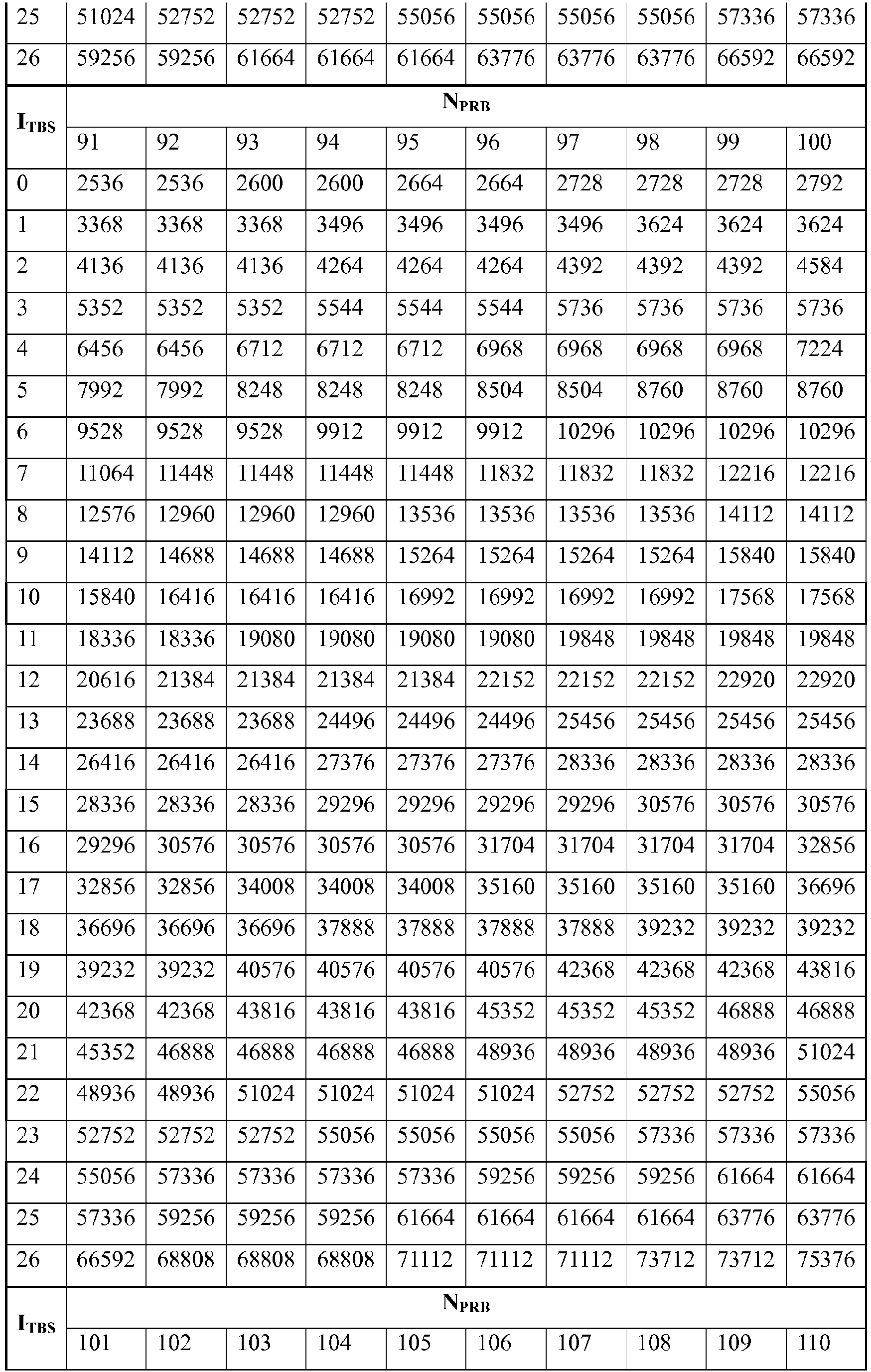

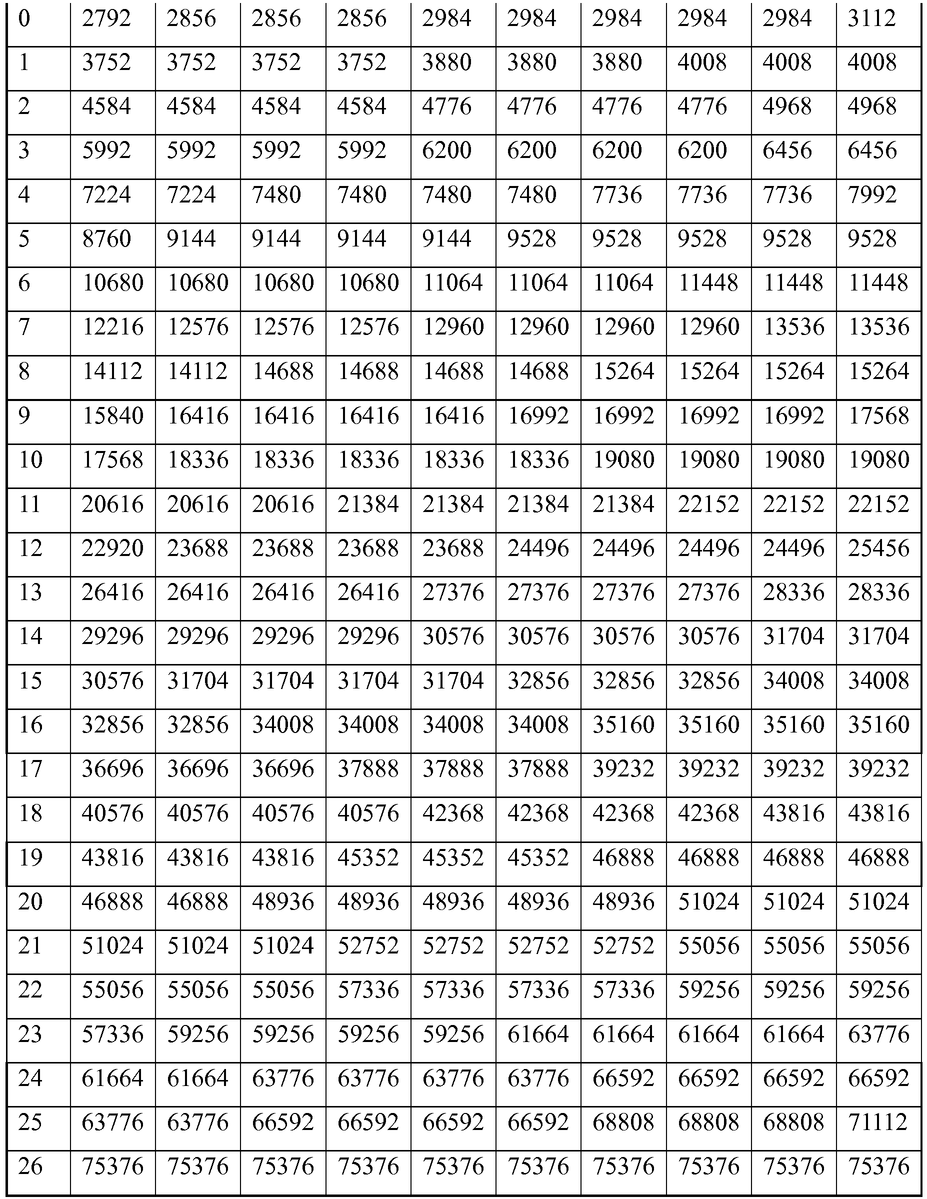

N_{PRB} in the first transport block size table represents the number of the physical resource block pairs, I_{TBS} represents the TBS index value, and an element in the table represents the transport block size TBS.

Further, the set conversion factor may include a first set conversion factor corresponding to a first modulation and coding scheme level and a second set conversion factor corresponding to a second modulation and coding scheme level in the transport block size table, and the first set conversion factor is different from the second set conversion factor.

Specifically, the conversion factor may include, for example, one type of conversion factor corresponding to a class 1 modulation and coding scheme level and another type of conversion factor corresponding to a class 2 modulation and coding scheme level in the transport block size table. That is, if the MCS level determined by the base station is the class 1 modulation and coding scheme level, the number of the second physical resource block pairs is the number of the first physical resource block pairs multiplied by a conversion factor corresponding to the class 1 modulation and coding scheme level; and if the MCS level determined by the base station is the class 2 modulation and coding scheme level, the number of the second physical resource block pairs is the number of the first physical resource block pairs multiplied by a conversion factor corresponding to the class 2 modulation and coding scheme level.

In other embodiments, there may be multiple conversion factors, which respectively correspond to multiple classes of MCS levels. Methods for determining classes of the MCS levels may further vary with system overheads.

Based on the foregoing embodiment, furthermore, the first modulation and coding scheme level may be a maximum modulation and coding scheme level in the transport block size table; and the second modulation and coding scheme level may be a non-maximum modulation and coding scheme level in the transport block size table.

Specifically, the first modulation and coding scheme level may be the maximum modulation and coding scheme level in the transport block size table; and the second modulation and coding scheme level may be the non-maximum modulation and coding scheme level in the transport block size table. In other embodiments, the first modulation and coding scheme level may further be the maximum modulation and coding scheme level in the transport block size table and any other one or more coding levels.

Based on the foregoing embodiment, furthermore, the first set conversion factor may be 1.1; and the second set conversion factor may be 1.3.

For example, if the MCS level determined by the base station is 8, the number of the first physical resource block pairs is 11, and the system overhead is 12 resource elements, the base station selects, from the transport block size table, the TBS corresponding to the modulation and coding scheme level and corresponding to the number of the second physical resource block pairs, and the number of the second physical resource block pairs is a product of the number of the first physical resource block pairs 11 and the set conversion factor. Further, because the MCS level 8 is a non-maximum modulation and coding scheme level, and the set conversion factor is 1.3, the number of the second physical resource block pairs is 11 multiplied by 1.3, which equals 14.3. In this case, the base station may round off the number 14.3 of the second physical resource block pairs to an integer, where a rounding-off process may be rounding up to an integer or rounding down to an integer. In the transport block size table, a TBS corresponding to the MCS level 8 and corresponding to the number of the physical resource block pairs 14 is determined, the service data is modulated onto the determined TBS and is transmitted to the UE, and the UE is notified that the MCS level is 8 and that the number of the physical resource block pairs determined by the base station is 11, so that the UE receives the service data according to the MCS level and the number of the physical resource block pairs.

Further, if the number of the second physical resource block pairs is larger than the maximum number of physical resource block pairs of the transport block size table, the TBS corresponding to the modulation and coding scheme level and corresponding to the number of the second physical resource block pairs is a TBS corresponding to the modulation and coding scheme level and corresponding to the maximum number of the physical resource block pairs.

Specifically, for example, when the product of the number of the first physical resource block pairs and the set conversion factor is larger than the maximum number of the physical resource block pairs included in the transport block size table, the TBS corresponding to the modulation and coding scheme level and corresponding to the number of the second physical resource block pairs is the TBS corresponding to the modulation and coding scheme level and corresponding to the maximum number of the physical resource block pairs.

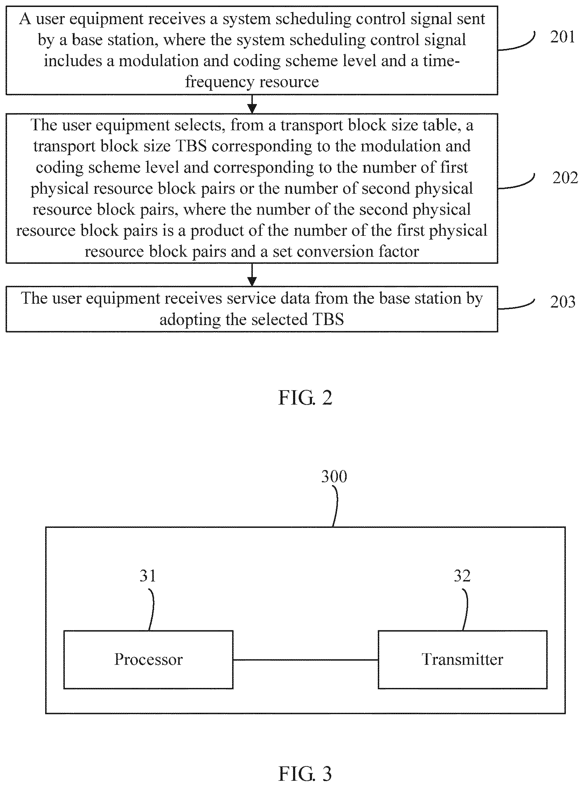

FIG. 2 is a method flowchart of a second embodiment of a data transmission method of the present invention. As shown in FIG. 2, the data transmission method of this embodiment includes:

201: A user equipment receives a system scheduling control signal sent by a base station, where the system scheduling control signal includes a modulation and coding scheme level and a time-frequency resource.

202: The user equipment selects, from a transport block size table, a transport block size TBS corresponding to the modulation and coding scheme level and corresponding to the number of first physical resource block pairs or the number of second physical resource block pairs, where the number of the second physical resource block pairs is a product of the number of the first physical resource block pairs and a set conversion factor.

The user equipment (User Equipment, UE for short) may firstly determine, according to the determined MCS level and in the transport block size index table (Modulation and TBS index table for PDSCH), a modulation order index value and a TBS index value corresponding to the MCS level; and then select, from the transport block size table, the transport block size (Transport block size, TBS for short) corresponding to the MCS level and corresponding to the number of the first physical resource block pairs determined in step 202.

Alternatively, the UE may firstly determine, according to the determined MCS level, in the transport block size index table (Modulation and TBS index table for PDSCH), a modulation order index value and a TBS index value corresponding to the MCS level; and then, select, from the transport block size table, the TBS corresponding to the MCS level and corresponding to the number of the second physical resource block pairs.

The number of the first physical resource block pairs is the number of the physical resource block pairs determined by the UE according to the time-frequency resource included in the received system scheduling control signal, and the number of the second physical resource block pairs is a product of the number of the first physical resource block pairs and the set conversion factor.

203: The user equipment receives service data from the base station by adopting the selected TBS.

In the data transmission method of this embodiment, the user equipment receives a system scheduling control signal sent by the base station, where the system scheduling control signal includes a modulation and coding scheme level and a time-frequency resource; and selects, from a transport block size table, a transport block size TBS corresponding to the modulation and coding scheme level and corresponding to the number of first physical resource block pairs or the number of second physical resource block pairs, where the number of the second physical resource block pairs is a product of the number of the first physical resource block pairs and a set conversion factor. The user equipment receives service data from the base station by adopting the selected TBS. In this way, a selection of the TBS by the user equipment is implemented, so that an expected coding rate can be achieved when the user equipment receives the service data transmitted by the base station according to the selected TBS, and system throughput is improved.

Further, that the user equipment selects, from a transport block size table, a transport block size TBS corresponding to the modulation and coding scheme level and corresponding to the number of first physical resource block pairs or corresponding to the number of second physical resource block pairs, includes that: the user equipment selects, according to a system configuration parameter or a system overhead size, the TBS corresponding to the modulation and coding scheme level and corresponding to the number of the first physical resource block pairs, or, select the TBS corresponding to the modulation and coding scheme level and corresponding to the number of the second physical resource block pairs.

Specifically, the UE may select, according to the system configuration parameter, the TBS corresponding to the modulation and coding scheme level and corresponding to the number of the first physical resource block pairs, or, select the TBS corresponding to the modulation and coding scheme level and corresponding to the number of the second physical resource block pairs.

For example, when the system configuration parameter indicates that control signaling contains a physical downlink control channel, it indicates that the system instructs the UE to select the TBS corresponding to the modulation and coding scheme level and corresponding to the number of the first physical resource block pairs; and when the system configuration parameter indicates that the control signaling does not contain the physical downlink control channel, it indicates that the system instructs the UE to select the TBS corresponding to the modulation and coding scheme level and corresponding to the number of the second physical resource block pairs.

Alternatively, the UE may select, according to the system overhead size, the TBS corresponding to the modulation and coding scheme level and corresponding to the number of the first physical resource block pairs, or, select the TBS corresponding to the modulation and coding scheme level and corresponding to the number of the second physical resource block pairs.

For example, when the system overhead size is 48 resource elements, it indicates that the system instructs the UE to select the TBS corresponding to the modulation and coding scheme level and corresponding to the number of the first physical resource block pairs; and when the system overhead is 12 resource elements, it indicates that the system instructs the UE to select the TBS corresponding to the modulation and coding scheme level and corresponding to the number of the second physical resource block pairs.

Further, the user equipment receives a higher-layer signaling message sent by the base station, where the higher-layer signaling message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

Specifically, the higher-layer signaling message received by the UE from the base station may carry the instruction information of instructing the UE to select the TBS corresponding to the modulation and coding scheme level and corresponding to the number of the first physical resource block pairs, or, to select the TBS corresponding to the modulation and coding scheme level and corresponding to the number of the second physical resource block pairs.

Further, the user equipment receives a downlink control message sent by the base station, where the downlink control message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs, which may increase a switching speed of the UE among different selections.

Further, the transport block size table includes: a transport block size table of layer 1 data in a Long Term Evolution Release 8 LTE REL.8 system. The transport block size table of layer 1 data in the LTE REL.8 is shown in Table 1. Reference may be made to Table 1, and details are not described herein again.

Further, the set conversion factor includes a first set conversion factor corresponding to a first modulation and coding scheme level and a second set conversion factor corresponding to a second modulation and coding scheme level in the transport block size table, and the first set conversion factor is different from the second set conversion factor.

Specifically, the conversion factor may include, for example, one type of conversion factor corresponding to a class 1 modulation and coding scheme level and another type of conversion factor corresponding to a class 2 modulation and coding scheme level in the transport block size table. That is, if the MCS level included in the system scheduling control signal received by the UE is the class 1 modulation and coding scheme level, the number of the second physical resource block pairs is a product of the number of the first physical resource block pairs multiplied by a conversion factor corresponding to the class 1 modulation and coding scheme level; and if the MCS level included in the system scheduling control signal received by the UE is the class 2 modulation and coding scheme level, the number of the second physical resource block pairs is the number of the first physical resource block pairs multiplied by a conversion factor corresponding to the class 2 modulation and coding scheme level.

In other embodiments, there may be multiple conversion factors, which respectively correspond to multiple classes of MCS levels. Methods for determining classes of the MCS levels may further vary with system overheads.

Based on the foregoing embodiment, furthermore, the first modulation and coding scheme level is a maximum modulation and coding scheme level in the transport block size table; and the second modulation and coding scheme level is a non-maximum modulation and coding scheme level in the transport block size table.

Specifically, the first modulation and coding scheme level may be the maximum modulation and coding scheme level in the transport block size table; and the second modulation and coding scheme level may be the non-maximum modulation and coding scheme level in the transport block size table. In other embodiments, the first modulation and coding scheme level may further be the maximum modulation and coding scheme level in the transport block size table and any other one or more coding levels.

Further, the first set conversion factor is 1.1; and the second set conversion factor is 1.3.

For example, if the UE determines, according to the system scheduling control signal sent by the base station, that the MCS level is 8, that the number of the first physical resource block pairs is 11 PRB pairs, and that the system overhead is 12 resource elements, the UE selects, from the transport block size table, the TBS corresponding to the modulation and coding scheme level and corresponding to the number of the second physical resource block pairs, and the number of the second physical resource block pairs is a product of the number of the first physical resource block pairs 11 and the set conversion factor. Further, because the MCS level 8 is a non-maximum modulation and coding scheme level, and the set conversion factor is 1.3, the number of the second physical resource block pairs is 11 multiplied by 1.3, which equals 14.3. In this case, the UE may round off the number 14.3 of the second physical resource block pairs to an integer, where a rounding-off process may be rounding up to an integer or rounding down to an integer and is the same as a rounding-off manner of the base station. That is, if the base station adopts rounding up to an integer, the UE also adopts rounding up to an integer; and if the base station adopts rounding down to an integer, the UE also adopts rounding down to an integer. In the transport block size table, a TBS corresponding to the MCS level 8 and corresponding to the number of the physical resource block pairs 14 is determined, and the UE receives the service data sent by the base station according to the TBS.

Further, if the number of the second physical resource block pairs is larger than the maximum number of physical resource block pairs of the transport block size table, the TBS corresponding to the modulation and coding scheme level and corresponding to the number of the second physical resource block pairs is a TBS corresponding to the modulation and coding scheme level and corresponding to the maximum number of the physical resource block pairs.

Specifically, for example, when the product of the number of the first physical resource block pairs and the set conversion factor is larger than the maximum number of the physical resource block pairs included in the transport block size table, the TBS corresponding to the modulation and coding scheme level and corresponding to the number of the second physical resource block pairs is the TBS corresponding to the modulation and coding scheme level and corresponding to the maximum number of the physical resource block pairs.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

FIG. 3 is a schematic structural diagram of a first embodiment of a base station of the present invention. As shown in FIG. 3, a base station 300 of this embodiment includes: a processor 31 and a transmitter 32. The processor 31 may be configured to determine a modulation and coding scheme level; determine a time-frequency resource, and determine the number of first physical resource block pairs according to the time-frequency resource; and select, from a transport block size table, a transport block size TBS corresponding to the modulation and coding scheme level and corresponding to the number of first physical resource block pairs or the number of second physical resource block pairs, where the number of the second physical resource block pairs is a product of the number of the first physical resource block pairs and a set conversion factor. The transmitter 32 may be configured to send service data to a user equipment by adopting the selected TBS; and send a system scheduling control signal to the user equipment, where the system scheduling control signal includes the modulation and coding scheme level and the time-frequency resource.

In the base station of this embodiment, the processor 31 determines a modulation and coding scheme level; determines a time-frequency resource, and determines the number of first physical resource block pairs according to the time-frequency resource; and selects, from a transport block size table, a transport block size TBS corresponding to the modulation and coding scheme level and corresponding to the number of first physical resource block pairs or the number of second physical resource block pairs, where the number of the second physical resource block pairs is a product of the number of the first physical resource block pairs and a set conversion factor; and the transmitter sends service data to a user equipment by adopting the selected TBS; and sends a system scheduling control signal to the user equipment, where the system scheduling control signal includes the modulation and coding scheme level and the time-frequency resource. In this way, a selection of the TBS by the base station is implemented, so that an expected coding rate can be achieved when the base station transmits the service data to the UE according to the selected TBS, and system throughput is improved.

Further, the processor 31 may be further configured to select, according to a system configuration parameter or a system overhead size, the TBS corresponding to the modulation and coding scheme level and corresponding to the number of the first physical resource block pairs, or, select the TBS corresponding to the modulation and coding scheme level and corresponding to the number of the second physical resource block pairs.

Further, the transmitter 32 may be further configured to transmit a higher-layer signaling message to the user equipment, where the higher-layer signaling message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

Further, the transmitter 32 may be further configured to send a downlink control message to the user equipment, where the downlink control message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

Further, the transport block size table may include: a transport block size table of layer 1 data in a Long Term Evolution Release 8 LTE REL.8 system.

Further, the set conversion factor may include a first set conversion factor corresponding to a first modulation and coding scheme level and a second set conversion factor corresponding to a second modulation and coding scheme level in the transport block size table, and the first set conversion factor is different from the second set conversion factor.

Further, the first modulation and coding scheme level is a maximum modulation and coding scheme level in the transport block size table; and the second modulation and coding scheme level is a non-maximum modulation and coding scheme level in the transport block size table.

Further, the first set conversion factor is 1.1; and the second set conversion factor is 1.3.

Further, the processor 31 may be further configured to, when the number of the second physical resource block pairs is larger than the maximum number of physical resource block pairs of the transport block size table, determine that the TBS corresponding to the modulation and coding scheme level and corresponding to the number of the second physical resource block pairs is the TBS corresponding to the modulation and coding scheme level and corresponding to the maximum number of the physical resource block pairs.

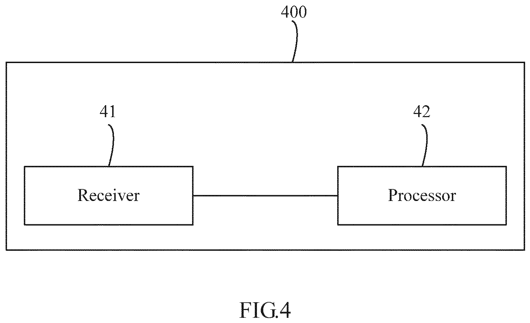

FIG. 4 is a schematic structural diagram of a first embodiment of a user equipment of the present invention. As shown in FIG. 4, a user equipment 400 of this embodiment includes: a receiver 41 and a processor 42. The receiver 41 may be configured to receive a system scheduling control signal sent by a base station, where the system scheduling control signal includes a modulation and coding scheme level and a time-frequency resource. The processor 42 may be configured to select, from a transport block size table, a transport block size TBS corresponding to the modulation and coding scheme level and corresponding to the number of first physical resource block pairs or corresponding to the number of second physical resource block pairs, where the number of the second physical resource block pairs is a product of the number of the first physical resource block pairs and a set conversion factor; and receive service data from the base station by adopting the selected TBS.

In the user equipment of this embodiment, a receiver receives a system scheduling control signal sent by a base station, where the system scheduling control signal includes a modulation and coding scheme level and a time-frequency resource; and a processor selects, from a transport block size table, a transport block size TBS corresponding to the modulation and coding scheme level and corresponding to the number of first physical resource block pairs or the number of second physical resource block pairs, where the number of the second physical resource block pairs is a product of the number of the first physical resource block pairs and a set conversion factor; and receives service data from the base station by adopting the selected TBS. In this way, a selection of the TBS by the user equipment is implemented, so that an expected coding rate can be achieved when the user equipment receives the service data transmitted by the base station according to the selected TBS, and system throughput is improved.

Further, the processor 42 may be further configured to select, according to a system configuration parameter or a system overhead size, the TBS corresponding to the modulation and coding scheme level and corresponding to the number of the first physical resource block pairs, or, select the TBS corresponding to the modulation and coding scheme level and corresponding to the number of the second physical resource block pairs.

Further, the receiver 41 may be further configured to receive a higher-layer signaling message sent by the base station, where the higher-layer signaling message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

Further, the receiver 41 may be further configured to receive a downlink control message sent by the base station, where the downlink control message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

Further, the transport block size table may include: a transport block size table of layer 1 data in a Long Term Evolution Release 8 LTE REL.8 system, and the transport block size table of layer 1 data in the LTE REL.8 may be shown in Table 1. Reference may be made to Table 1, and details are not described herein again.

Further, the set conversion factor may include a first set conversion factor corresponding to a first modulation and coding scheme level and a second set conversion factor corresponding to a second modulation and coding scheme level in the transport block size table, and the first set conversion factor is different from the second set conversion factor.

Further, the first modulation and coding scheme level is a maximum modulation and coding scheme level in the transport block size table; and the second modulation and coding scheme level is a non-maximum modulation and coding scheme level in the transport block size table.

Further, the first set conversion factor is 1.1; and the second set conversion factor is 1.3.

Further, the processor 42 may be further configured to, when the number of the second physical resource block pairs is larger than the maximum number of physical resource block pairs of the transport block size table, determine that the TBS corresponding to the modulation and coding scheme level and corresponding to the number of the second physical resource block pairs is the TBS corresponding to the modulation and coding scheme level and corresponding to the maximum number of the physical resource block pairs.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments without departing from the scope of the technical solutions of the embodiments of the present invention.

## Claims

1. A data transmission method, comprising:
determining (101), by a base station, a modulation and coding scheme level;
determining (102), by the base station, a time-frequency resource, and determining a number of first physical resource block pairs according to the time-frequency resource;
selecting (103), by the base station and from a transport block size table, a transport block size TBS corresponding to the modulation and coding scheme level and corresponding to the number of the first physical resource block pairs or a number of second physical resource block pairs, wherein the number of the second physical resource block pairs is a product of the number of the first physical resource block pairs and a set conversion factor;
sending (104), by the base station, service data to a user equipment by adopting the selected TBS; and
sending (105), by the base station, a system scheduling control signal to the user equipment, wherein the system scheduling control signal comprises the modulation and coding scheme level and the time-frequency resource;
**characterized in that** the selecting (103), by the base station and from a transport block size table, a transport block size TBS corresponding to the modulation and coding scheme level and corresponding to the number of the first physical resource block pairs or the number of second physical resource block pairs, comprises:
selecting, by the base station according to a system overhead size, the TBS corresponding to the modulation and coding scheme level and corresponding to the number of the first physical resource block pairs, or, selecting the TBS corresponding to the modulation and coding scheme level and corresponding to the number of the second physical resource block pairs.

2. The method according to claim 1, further comprising:
sending, by the base station, a higher-layer signaling message to the user equipment, wherein the higher-layer signaling message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

3. The method according to claim 1, further comprising:
sending, by the base station, a downlink control message to the user equipment, wherein the downlink control message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

4. The method according to any one of claims 1 to 3, wherein the set conversion factor comprises a first set conversion factor corresponding to a first modulation and coding scheme level and a second set conversion factor corresponding to a second modulation and coding scheme level in the transport block size table, and the first set conversion factor is different from the second set conversion factor.

5. The method according to claim 4, wherein the first modulation and coding scheme level is a maximum modulation and coding scheme level in the transport block size table; and the second modulation and coding scheme level is a non-maximum modulation and coding scheme level in the transport block size table.

6. The method according to any one of claims 1 to 5, wherein if the number of the second physical resource block pairs is larger than the maximum number of physical resource block pairs of the transport block size table, the TBS corresponding to the modulation and coding scheme level and corresponding to the number of the second physical resource block pairs is a TBS corresponding to the modulation and coding scheme level and corresponding to the maximum number of the physical resource block pairs.

7. A data reception method, comprising:
receiving (201), by a user equipment, a system scheduling control signal sent by a base station, wherein the system scheduling control signal comprises a modulation and coding scheme level and a time-frequency resource;
selecting (202), by the user equipment and from a transport block size table, a transport block size TBS corresponding to the modulation and coding scheme level and corresponding to a number of first physical resource block pairs or a number of second physical resource block pairs, wherein the number of the second physical resource block pairs is a product of the number of the first physical resource block pairs and a set conversion factor; and wherein the number of first physical resource block pairs is determined according to the time-frequency resource; and
receiving (203), by the user equipment, service data from the base station by adopting the selected TBS.
**characterized in that** the selecting (202), by the user equipment and from a transport block size table, a transport block size TBS corresponding to the modulation and coding scheme level and corresponding to the number of the first physical resource block pairs or the number of second physical resource block pairs, comprises:
selecting, by the user equipment according to a system overhead size, the TBS corresponding to the modulation and coding scheme level and corresponding to the number of the first physical resource block pairs, or, selecting the TBS corresponding to the modulation and coding scheme level and corresponding to the number of the second physical resource block pairs.

8. The method according to claim 7, further comprising:
receiving, by the user equipment, a higher-layer signaling message sent by the base station, wherein the higher-layer signaling message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

9. The method according to claim 7, further comprising:
receiving, by the user equipment, a downlink control message sent by the base station, wherein the downlink control message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

10. The method according to any one of claims 7 to 9, wherein the set conversion factor comprises a first set conversion factor corresponding to a first modulation and coding scheme level and a second set conversion factor corresponding to a second modulation and coding scheme level in the transport block size table, and the first set conversion factor is different from the second set conversion factor.

11. The method according to claim 10, wherein the first modulation and coding scheme level is a maximum modulation and coding scheme level in the transport block size table; and the second modulation and coding scheme level is a non-maximum modulation and coding scheme level in the transport block size table.

12. The method according to any one of claims 7 to 11, wherein if the number of the second physical resource block pairs is larger than the maximum number of physical resource block pairs of the transport block size table, the TBS corresponding to the modulation and coding scheme level and corresponding to the number of the second physical resource block pairs is a TBS corresponding to the modulation and coding scheme level and corresponding to the maximum number of the physical resource block pairs.

13. A base station (300), comprising:
a processor (31), configured to determine a modulation and coding scheme level; determine a time-frequency resource, and determine a number of first physical resource block pairs according to the time-frequency resource; and select, from a transport block size table, a transport block size TBS corresponding to the modulation and coding scheme level and corresponding to the number of the first physical resource block pairs or a number of second physical resource block pairs, wherein the number of the second physical resource block pairs is a product of the number of the first physical resource block pairs and a set conversion factor; and
a transmitter (32), configured to send service data to a user equipment by adopting the selected TBS; and send a system scheduling control signal to the user equipment, wherein the system scheduling control signal comprises the modulation and coding scheme level and the time-frequency resource.
**characterized in that** the processor (31) is further configured to select, according to a system overhead size, the TBS corresponding to the modulation and coding scheme level and corresponding to the number of the first physical resource block pairs, or, select the TBS corresponding to the modulation and coding scheme level and corresponding to the number of the second physical resource block pairs.

14. The base station according to claim 13, wherein the transmitter (32) is further configured to send a higher-layer signaling message to the user equipment, wherein the higher-layer signaling message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

15. The base station according to claim 13, wherein the transmitter (32) is further configured to send a downlink control message to the user equipment, wherein the downlink control message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

16. The base station according to any one of claims 13 to 15, wherein the set conversion factor comprises a first set conversion factor corresponding to a first modulation and coding scheme level and a second set conversion factor corresponding to a second modulation and coding scheme level in the transport block size table, and the first set conversion factor is different from the second set conversion factor.

17. The base station according to claim 16, wherein the first modulation and coding scheme level is a maximum modulation and coding scheme level in the transport block size table; and the second modulation and coding scheme level is a non-maximum modulation and coding scheme level in the transport block size table.

18. The base station according to any one of claims 13 to 17, wherein the processor (31) is further configured to determine, when the number of the second physical resource block pairs is larger than the maximum number of physical resource block pairs of the transport block size table, that the TBS corresponding to the modulation and coding scheme level and corresponding to the number of the second physical resource block pairs is a TBS corresponding to the modulation and coding scheme level and corresponding to the maximum number of the physical resource block pairs.

19. A user equipment (400), comprising:
a receiver (41), configured to receive a system scheduling control signal sent by a base station, wherein the system scheduling control signal comprises a modulation and coding scheme level and a time-frequency resource; and
a processor (42), configured to select, from a transport block size table, a transport block size TBS corresponding to the modulation and coding scheme level and corresponding to a number of the first physical resource block pairs or corresponding to a number of second physical resource block pairs, wherein the number of the second physical resource block pairs is a product of the number of the first physical resource block pairs and a set conversion factor; and wherein the number of first physical resource block pairs is determined according to the time-frequency resource; and receive service data from the base station by adopting the selected TBS.
**characterized in that** the processor (42) is further configured to select, according to a system overhead size, the TBS corresponding to the modulation and coding scheme level and corresponding to the number of the first physical resource block pairs, or, select the TBS corresponding to the modulation and coding scheme level and corresponding to the number of the second physical resource block pairs.

20. The user equipment according to claim 19, wherein the receiver (41) is further configured to receive a higher-layer signaling message sent by the base station, wherein the higher-layer signaling message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

21. The user equipment according to claim 19, wherein the receiver (41) is further configured to receive a downlink control message sent by the base station, wherein the downlink control message carries instruction information of selecting the TBS corresponding to the modulation and coding scheme level and corresponding to the number of the first physical resource block pairs, or, of selecting the TBS corresponding to the modulation and coding scheme level and corresponding to the number of the second physical resource block pairs.

22. The user equipment according to any one of claims 19 to 21, wherein the set conversion factor comprises a first set conversion factor corresponding to a first modulation and coding scheme level and a second set conversion factor corresponding to a second modulation and coding scheme level in the transport block size table, and the first set conversion factor is different from the second set conversion factor.

23. The user equipment according to claim 22, wherein the first modulation and coding scheme level is a maximum modulation and coding scheme level in the transport block size table; and the second modulation and coding scheme level is a non-maximum modulation and coding scheme level in the transport block size table.

24. The user equipment according to any one of claims 19 to 23, wherein the processor (42) is further configured to determine, when the number of the second physical resource block pairs is larger than the maximum number of physical resource block pairs of the transport block size table, that the TBS corresponding to the modulation and coding scheme level and corresponding to the number of the second physical resource block pairs is a TBS corresponding to the modulation and coding scheme level and corresponding to the maximum number of the physical resource block pairs.

## Patentansprüche

1. Datenübertragungsverfahren, umfassend:
Bestimmen (101), durch eine Basisstation, einer Modulations- und Codierschemastufe;
Bestimmen (102), durch die Basisstation, einer Zeit-Frequenz-Ressource und Bestimmen einer Anzahl von ersten physischen Ressourcenblockpaaren gemäß der Zeit-Frequenz-Ressource;
Auswählen (103), durch die Basisstation und aus einer Transportblockgrößentabelle, einer Transportblockgröße (Transport Block Size, TBS), die der Modulations- und Codierschemastufe entspricht und der Anzahl der ersten physischen Ressourcenblockpaare oder einer Anzahl von zweiten physischen Ressourcenblockpaaren entspricht, wobei die Anzahl der zweiten physischen Ressourcenblockpaare ein Produkt der Anzahl der ersten physischen Ressourcenblockpaare und eines festgelegten Umrechnungsfaktors ist;
Senden (104), durch die Basisstation, von Dienstdaten an ein Benutzer-Equipment durch Verwendung der ausgewählten TBS; und
Senden (105), durch die Basisstation, eines Systemzeitplanungs-Steuerungssignals an das Benutzer-Equipment, wobei das Systemzeitplanungs-Steuerungssignal die Modulations- und Codierschemastufe und die Zeit-Frequenz-Ressource umfasst;
**dadurch gekennzeichnet, dass** das Auswählen (103), durch die Basisstation und aus einer Transportblockgrößentabelle, einer Transportblockgröße (Transport Block Size, TBS), die der Modulations- und Codierschemastufe entspricht und der Anzahl der ersten physischen Ressourcenblockpaare oder der Anzahl der zweiten physischen Ressourcenblockpaare entspricht, umfasst:
Auswählen, durch die Basisstation gemäß einer Systemverwaltungsdatengröße, der TBS, die der Modulations- und Codierschemastufe entspricht und der Anzahl der ersten physischen Ressourcenblockpaare entspricht, oder Auswählen der TBS, die der Modulations- und Codierschemastufe entspricht und der Anzahl der zweiten physischen Ressourcenblockpaare entspricht.

2. Verfahren gemäß Anspruch 1, ferner umfassend:
Senden, durch die Basisstation, einer höherschichtigen Signalisierungsnachricht an das Benutzer-Equipment, wobei die höherschichtige Signalisierungsnachricht Anweisungsinformationen zum Auswählen der TBS, die der Modulations- und Codierschemastufe entspricht und der Anzahl der ersten physischen Ressourcenblockpaare entspricht, oder zum Auswählen der TBS, die der Modulations-und Codierschemastufe entspricht und der Anzahl der zweiten physischen Ressourcenblockpaare entspricht, enthält.

3. Verfahren gemäß Anspruch 1, ferner umfassend:
Senden, durch die Basisstation, einer Abwärtsstreckensteuerungsnachricht an das Benutzer-Equipment, wobei
die Abwärtsstreckensteuerungsnachricht Anweisungsinformationen zum Auswählen der TBS, die der Modulations- und Codierschemastufe entspricht und der Anzahl der ersten physischen Ressourcenblockpaare entspricht, oder zum Auswählen der TBS, die der Modulations- und Codierschemastufe entspricht und der Anzahl der zweiten physischen Ressourcenblockpaare entspricht, enthält.

4. Verfahren gemäß einem der Ansprüche 1 bis 3, wobei der festgelegte Umrechnungsfaktor einen ersten festgelegten Umrechnungsfaktor, der einer ersten Modulations- und Codierschemastufe entspricht, und einen zweiten festgelegten Umrechnungsfaktor, der einer zweiten Modulations- und Codierschemastufe in der Transportblockgrößentabelle entspricht, umfasst und sich der erste festgelegte Umrechnungsfaktor vom zweiten festgelegten Umrechnungsfaktor unterscheidet.

5. Verfahren gemäß Anspruch 4, wobei die erste Modulations- und Codierschemastufe eine maximale Modulations- und Codierschemastufe in der Transportblockgrößentabelle ist; und die zweite Modulations- und Codierschemastufe eine nicht maximale Modulations- und Codierschemastufe in der Transportblockgrößentabelle ist.

6. Verfahren gemäß einem der Ansprüche 1 bis 5, wobei, falls die Anzahl der zweiten physischen Ressourcenblockpaare größer als die maximale Anzahl von physischen Ressourcenblockpaaren der Transportblockgrößentabelle ist, die TBS, die der Modulations- und Codierschemastufe entspricht und der Anzahl der zweiten physischen Ressourcenblockpaare entspricht, eine TBS ist, die der Modulations- und Codierschemastufe entspricht und der maximalen Anzahl der physischen Ressourcenblockpaare entspricht.

7. Datenempfangsverfahren, umfassend:
Empfangen (201), durch ein Benutzer-Equipment, eines Systemzeitplanungs-Steuerungssignals, das durch eine Basisstation gesendet wird, wobei das Systemzeitplanungs-Steuerungssignal eine Modulations- und Codierschemastufe und eine Zeit-Frequenz-Ressource umfasst;
Auswählen (202), durch das Benutzer-Equipment und aus einer Transportblockgrößentabelle, einer Transportblockgröße (Transport Block Size, TBS), die der Modulations- und Codierschemastufe entspricht und einer Anzahl von ersten physischen Ressourcenblockpaaren oder einer Anzahl von zweiten physischen Ressourcenblockpaaren entspricht, wobei die Anzahl der zweiten physischen Ressourcenblockpaare ein Produkt der Anzahl der ersten physischen Ressourcenblockpaare und eines festgelegten Umrechnungsfaktors ist;
und
wobei die Anzahl der ersten physischen Ressourcenblockpaare gemäß der Zeit-Frequenz-Ressource bestimmt wird; und
Empfangen (203), durch das Benutzer-Equipment, von Dienstdaten von der Basisstation durch Verwendung der ausgewählten TBS,
**dadurch gekennzeichnet, dass** das Auswählen (202), durch das Benutzer-Equipment und aus einer Transportblockgrößentabelle, einer Transportblockgröße (Transport Block Size, TBS), die der Modulations- und Codierschemastufe entspricht und der Anzahl der ersten physischen Ressourcenblockpaare oder der Anzahl der zweiten physischen Ressourcenblockpaare entspricht, umfasst:
Auswählen, durch das Benutzer-Equipment gemäß einer Systemverwaltungsdatengröße, der TBS, die der Modulations- und Codierschemastufe entspricht und der Anzahl der ersten physischen Ressourcenblockpaare entspricht, oder Auswählen der TBS, die der Modulations- und Codierschemastufe entspricht und der Anzahl der zweiten physischen Ressourcenblockpaare entspricht.

8. Verfahren gemäß Anspruch 7, ferner umfassend:
Empfangen, durch das Benutzer-Equipment, einer höherschichtigen Signalisierungsnachricht, die durch die Basisstation gesendet wird, wobei die höherschichtige Signalisierungsnachricht Anweisungsinformationen zum Auswählen der TBS, die der Modulations- und Codierschemastufe entspricht und der Anzahl der ersten physischen Ressourcenblockpaare entspricht, oder zum Auswählen der TBS, die der Modulations- und Codierschemastufe entspricht und der Anzahl der zweiten physischen Ressourcenblockpaare entspricht, enthält.

9. Verfahren gemäß Anspruch 7, ferner umfassend:
Empfangen, durch das Benutzer-Equipment, einer Abwärtsstreckensteuerungsnachricht, die durch die Basisstation gesendet wird, wobei die Abwärtsstreckensteuerungsnachricht Anweisungsinformationen zum Auswählen der TBS, die der Modulations- und Codierschemastufe entspricht und der Anzahl der ersten physischen Ressourcenblockpaare entspricht, oder zum Auswählen der TBS, die der Modulations- und Codierschemastufe entspricht und der Anzahl der zweiten physischen Ressourcenblockpaare entspricht, enthält.

10. Verfahren gemäß einem der Ansprüche 7 bis 9, wobei der festgelegte Umrechnungsfaktor einen ersten festgelegten Umrechnungsfaktor, der einer ersten Modulations- und Codierschemastufe entspricht, und einen zweiten festgelegten Umrechnungsfaktor, der einer zweiten Modulations- und Codierschemastufe in der Transportblockgrößentabelle entspricht, umfasst und sich der erste festgelegte Umrechnungsfaktor vom zweiten festgelegten Umrechnungsfaktor unterscheidet.

11. Verfahren gemäß Anspruch 10, wobei die erste Modulations- und Codierschemastufe eine maximale Modulations- und Codierschemastufe in der Transportblockgrößentabelle ist; und die zweite Modulations- und Codierschemastufe eine nicht maximale Modulations- und Codierschemastufe in der Transportblockgrößentabelle ist.

12. Verfahren gemäß einem der Ansprüche 7 bis 11, wobei, falls die Anzahl der zweiten physischen Ressourcenblockpaare größer als die maximale Anzahl von physischen Ressourcenblockpaaren der Transportblockgrößentabelle ist, die TBS, die der Modulations- und Codierschemastufe entspricht und der Anzahl der zweiten physischen Ressourcenblockpaare entspricht, eine TBS ist, die der Modulations- und Codierschemastufe entspricht und der maximalen Anzahl der physischen Ressourcenblockpaare entspricht.

13. Basisstation (300), umfassend:
einen Prozessor (31), der dafür ausgelegt ist, eine Modulations- und Codierschemastufe zu bestimmen;
eine Zeit-Frequenz-Ressource zu bestimmen und eine Anzahl von ersten physischen Ressourcenblockpaaren gemäß der Zeit-Frequenz-Ressource zu bestimmen; und aus einer Transportblockgrößentabelle eine Transportblockgröße (Transport Block Size, TBS) auszuwählen, die der Modulations- und Codierschemastufe entspricht und der Anzahl der ersten physischen Ressourcenblockpaare oder einer Anzahl von zweiten physischen Ressourcenblockpaaren entspricht, wobei die Anzahl der zweiten physischen Ressourcenblockpaare ein Produkt der Anzahl der ersten physischen Ressourcenblockpaare und eines festgelegten Umrechnungsfaktors ist; und
einen Sender (32), der dafür ausgelegt ist, Dienstdaten an ein Benutzer-Equipment durch Verwendung der ausgewählten TBS zu senden; und ein Systemzeitplanungs-Steuerungssignal an das Benutzer-Equipment zu senden, wobei das Systemzeitplanungs-Steuerungssignal die Modulations- und Codierschemastufe und die Zeit-Frequenz-Ressource umfasst,
**dadurch gekennzeichnet, dass** der Prozessor (31) ferner dafür ausgelegt ist, gemäß einer Systemverwaltungsdatengröße, die TBS auszuwählen, die der Modulations- und Codierschemastufe entspricht und der Anzahl der ersten physischen Ressourcenblockpaare entspricht, oder die TBS auszuwählen, die der Modulations-und Codierschemastufe entspricht und der Anzahl der zweiten physischen Ressourcenblockpaare entspricht.

14. Basisstation gemäß Anspruch 13, wobei der Sender (32) ferner dafür ausgelegt ist, eine höherschichtige Signalisierungsnachricht an das Benutzer-Equipment zu senden, wobei die höherschichtige Signalisierungsnachricht Anweisungsinformationen zum Auswählen der TBS, die der Modulations- und Codierschemastufe entspricht und der Anzahl der ersten physischen Ressourcenblockpaare entspricht, oder zum Auswählen der TBS, die der Modulations- und Codierschemastufe entspricht und der Anzahl der zweiten physischen Ressourcenblockpaare entspricht, enthält.

15. Basisstation gemäß Anspruch 13, wobei der Sender (32) ferner dafür ausgelegt ist, eine Abwärtsstreckensteuerungsnachricht an das Benutzer-Equipment zu senden, wobei die Abwärtsstreckensteuerungsnachricht Anweisungsinformationen zum Auswählen der TBS, die der Modulations- und Codierschemastufe entspricht und der Anzahl der ersten physischen Ressourcenblockpaare entspricht, oder zum Auswählen der TBS, die der Modulations- und Codierschemastufe entspricht und der Anzahl der zweiten physischen Ressourcenblockpaare entspricht, enthält.

16. Basisstation gemäß einem der Ansprüche 13 bis 15, wobei der festgelegte Umrechnungsfaktor einen ersten festgelegten Umrechnungsfaktor, der einer ersten Modulations- und Codierschemastufe entspricht, und einen zweiten festgelegten Umrechnungsfaktor, der einer zweiten Modulations- und Codierschemastufe in der Transportblockgrößentabelle entspricht, umfasst und sich der erste festgelegte Umrechnungsfaktor vom zweiten festgelegten Umrechnungsfaktor unterscheidet.

17. Basisstation gemäß Anspruch 16, wobei die erste Modulations- und Codierschemastufe eine maximale Modulations- und Codierschemastufe in der Transportblockgrößentabelle ist; und die zweite Modulations- und Codierschemastufe eine nicht maximale Modulations- und Codierschemastufe in der Transportblockgrößentabelle ist.

18. Basisstation gemäß einem der Ansprüche 13 bis 17, wobei der Prozessor (31) ferner dafür ausgelegt ist zu bestimmen, wenn die Anzahl der zweiten physischen Ressourcenblockpaare größer als die maximale Anzahl von physischen Ressourcenblockpaaren der Transportblockgrößentabelle ist, dass die TBS, die der Modulations- und Codierschemastufe entspricht und der Anzahl der zweiten physischen Ressourcenblockpaare entspricht, eine TBS ist, die der Modulations- und Codierschemastufe entspricht und der maximalen Anzahl der physischen Ressourcenblockpaare entspricht.

19. Benutzer-Equipment (400), umfassend:
einen Empfänger (41), der dafür ausgelegt ist, ein Systemzeitplanungs-Steuerungssignal zu empfangen, das durch eine Basisstation gesendet wird, wobei das Systemzeitplanungs-Steuerungssignal eine Modulations- und Codierschemastufe und eine Zeit-Frequenz-Ressource umfasst; und
einen Prozessor (42), der dafür ausgelegt ist, aus einer Transportblockgrößentabelle eine Transportblockgröße (Transport Block Size, TBS) auszuwählen, die der Modulations- und Codierschemastufe entspricht und einer Anzahl von ersten physischen Ressourcenblockpaaren entspricht oder einer Anzahl von zweiten physischen Ressourcenblockpaaren entspricht, wobei die Anzahl der zweiten physischen Ressourcenblockpaare ein Produkt der Anzahl der ersten physischen Ressourcenblockpaare und eines festgelegten Umrechnungsfaktors ist; und
wobei die Anzahl der ersten physischen Ressourcenblockpaare gemäß der Zeit-Frequenz-Ressource bestimmt wird;
und Dienstdaten von der Basisstation durch Verwendung der ausgewählten TBS zu empfangen,
**dadurch gekennzeichnet, dass** der Prozessor (42) ferner dafür ausgelegt ist, gemäß einer Systemverwaltungsdatengröße, die TBS auszuwählen, die der Modulations- und Codierschemastufe entspricht und der Anzahl der ersten physischen Ressourcenblockpaare entspricht, oder die TBS auszuwählen, die der Modulations-und Codierschemastufe entspricht und der Anzahl der zweiten physischen Ressourcenblockpaare entspricht.

20. Benutzer-Equipment gemäß Anspruch 19, wobei der Empfänger (41) ferner dafür ausgelegt ist, eine höherschichtige Signalisierungsnachricht zu empfangen, die durch die Basisstation gesendet wird, wobei die höherschichtige Signalisierungsnachricht Anweisungsinformationen zum Auswählen der TBS, die der Modulations- und Codierschemastufe entspricht und der Anzahl der ersten physischen Ressourcenblockpaare entspricht, oder zum Auswählen der TBS, die der Modulations-und Codierschemastufe entspricht und der Anzahl der zweiten physischen Ressourcenblockpaare entspricht, enthält.

21. Benutzer-Equipment gemäß Anspruch 19, wobei der Empfänger (41) ferner dafür ausgelegt ist, eine Abwärtsstreckensteuerungsnachricht zu empfangen, die durch die Basisstation gesendet wird, wobei die Abwärtsstreckensteuerungsnachricht Anweisungsinformationen zum Auswählen der TBS, die der Modulations- und Codierschemastufe entspricht und der Anzahl der ersten physischen Ressourcenblockpaare entspricht, oder zum Auswählen der TBS, die der Modulations-und Codierschemastufe entspricht und der Anzahl der zweiten physischen Ressourcenblockpaare entspricht, enthält.

22. Benutzer-Equipment gemäß einem der Ansprüche 19 bis 21, wobei der festgelegte Umrechnungsfaktor einen ersten festgelegten Umrechnungsfaktor, der einer ersten Modulations- und Codierschemastufe entspricht, und einen zweiten festgelegten Umrechnungsfaktor, der einer zweiten Modulations- und Codierschemastufe in der Transportblockgrößentabelle entspricht, umfasst und sich der erste festgelegte Umrechnungsfaktor vom zweiten festgelegten Umrechnungsfaktor unterscheidet.

23. Benutzer-Equipment gemäß Anspruch 22, wobei die erste Modulations- und Codierschemastufe eine maximale Modulations- und Codierschemastufe in der Transportblockgrößentabelle ist; und die zweite Modulations- und Codierschemastufe eine nicht maximale Modulations- und Codierschemastufe in der Transportblockgrößentabelle ist.

24. Benutzer-Equipment gemäß einem der Ansprüche 19 bis 23, wobei der Prozessor (42) ferner dafür ausgelegt ist zu bestimmen, wenn die Anzahl der zweiten physischen Ressourcenblockpaare größer als die maximale Anzahl von physischen Ressourcenblockpaaren der Transportblockgrößentabelle ist, dass die TBS, die der Modulations- und Codierschemastufe entspricht und der Anzahl der zweiten physischen Ressourcenblockpaare entspricht, eine TBS ist, die der Modulations- und Codierschemastufe entspricht und der maximalen Anzahl der physischen Ressourcenblockpaare entspricht.

## Revendications

1. Procédé de transmission de données, comprenant :
la détermination (101), par une station de base, d'un niveau de plan de modulation et de codage ;
la détermination (102), par la station de base, d'une ressource temps-fréquence, et la détermination d'un nombre de premières paires de blocs de ressources physiques conformément à la ressource temps-fréquence ;
la sélection (103), par la station de base et à partir d'une table de tailles de blocs de transport, d'une taille de bloc de transport TBS correspondant au niveau de plan de modulation de codage et correspondant au nombre des premières paires de blocs de ressources physiques ou à un nombre de secondes paires de blocs de ressources physiques, dans lequel le nombre des secondes paires de blocs de ressources physiques est un produit du nombre des premières paires de blocs de ressources physiques et d'un facteur de conversion défini ;
l'envoi (104), par la station de base, de données de service à un équipement utilisateur en adoptant la TBS sélectionnée ; et
l'envoi (105), par la station de base, d'un signal de commande de programmation système à l'équipement utilisateur, dans lequel le signal de commande de programmation système comprend le niveau de plan de modulation et de codage et la ressource temps-fréquence;
**caractérisé en ce que** la sélection (103), par la station de base et à partir d'une table de tailles de blocs de transport, d'une taille de bloc de transport TBS correspondant au niveau de plan de modulation de codage et correspondant au nombre des premières paires de blocs de ressources physiques ou au nombre de secondes paires de blocs de ressources physiques comprend :
la sélection, par la station de base conformément à une taille de surdébit système, de la TBS correspondant au niveau de plan de modulation et de codage et correspondant au nombre des premières paires de blocs de ressources physiques, ou, la sélection de la TBS correspondant au niveau de plan de modulation et de codage et correspondant au nombre des secondes paires de blocs de ressources physiques.

2. Procédé selon la revendication 1, comprenant en outre :
l'envoi, par la station de base, d'un message de signalisation de couche supérieure à l'équipement utilisateur, dans lequel le message de signalisation de couche supérieure comporte des informations d'instruction de sélection de la TBS correspondant au niveau de plan de modulation et de codage et correspondant au nombre des premières paires de blocs de ressources physiques, ou, de sélection de la TBS correspondant au niveau de plan de modulation de codage et correspondant au nombre des secondes paires de blocs de ressources physiques.

3. Procédé selon la revendication 1, comprenant en outre :
l'envoi, par la station de base, d'un message de commande de liaison descendante à l'équipement utilisateur, dans lequel le message de commande de liaison descendante comporte des informations d'instruction de sélection de la TBS correspondant au niveau de plan de modulation et de codage et correspondant au nombre des premières paires de blocs de ressources physiques, ou, de sélection de la TBS correspondant au niveau de plan de modulation de codage et correspondant au nombre des secondes paires de blocs de ressources physiques.

4. Procédé selon l'une quelconque des revendications 1 à 3, dans lequel le facteur de conversion défini comprend un premier facteur de conversion défini correspondant à un premier niveau de plan de modulation et de codage et un second facteur de conversion défini correspondant à un second niveau de plan de modulation et de codage dans la table de tailles de blocs de transport, et le premier facteur de conversion défini est différent du second facteur de conversion défini.

5. Procédé selon la revendication 4, dans lequel le premier niveau de plan de modulation et de codage est un niveau de plan de modulation et de codage maximum dans la table de tailles de blocs de transport ; et le second niveau de plan de modulation et de codage est un niveau de plan de modulation et de codage non maximum dans la table de tailles de blocs de transport.

6. Procédé selon l'une quelconque des revendications 1 à 5, dans lequel si le nombre des secondes paires de blocs de ressources physiques est supérieur au nombre maximum de paires de blocs de ressources physiques de la table de tailles de blocs de transport, la TBS correspondant au niveau de plan de modulation et de codage et correspondant au nombre des secondes paires de blocs de ressources physiques est une TBS correspondant au niveau de plan de modulation et de codage correspondant au nombre maximum des paires de blocs de ressources physiques.

7. Procédé de réception de données, comprenant :
la réception (201), par un équipement utilisateur, d'un signal de commande de programmation système envoyé par une station de base, le signal de commande de programmation système comprenant un niveau de plan de modulation et de codage et une ressource temps-fréquence ;
la sélection (202), par l'équipement utilisateur et à partir d'une table de tailles de blocs de transport, d'une taille de bloc de transport TBS correspondant au niveau de plan de modulation de codage et correspondant au nombre des premières paires de blocs de ressources physiques ou à un nombre de secondes paires de blocs de ressources physiques, dans lequel le nombre des secondes paires de blocs de ressources physiques est un produit du nombre des premières paires de blocs de ressources physiques et d'un facteur de conversion défini ; et
dans lequel le nombre de premières paires de blocs de ressources physiques est déterminé conformément à la ressource temps-fréquence ; et
la réception (203), par l'équipement utilisateur, de données de service depuis la station de base en adoptant la TBS sélectionnée ;
**caractérisé en ce que** la sélection (202), par l'équipement utilisateur et à partir d'une table de tailles de blocs de transport, d'une taille de bloc de transport TBS correspondant au niveau de plan de modulation de codage et correspondant au nombre des premières paires de blocs de ressources physiques ou au nombre de secondes paires de blocs de ressources physiques comprend :
la sélection, par l'équipement utilisateur conformément à une taille de surdébit système, de la TBS correspondant au niveau de plan de modulation et de codage et correspondant au nombre des premières paires de blocs de ressources physiques, ou, la sélection de la TBS correspondant au niveau de plan de modulation et de codage et correspondant au nombre des secondes paires de blocs de ressources physiques.

8. Procédé selon la revendication 7, comprenant en outre :
la réception, par l'équipement utilisateur, d'un message de signalisation de couche supérieure envoyé par la station de base, dans lequel le message de signalisation de couche supérieure comporte des informations d'instruction de sélection de la TBS correspondant au niveau de plan de modulation et de codage et correspondant au nombre des premières paires de blocs de ressources physiques, ou, de sélection de la TBS correspondant au niveau de plan de modulation de codage et correspondant au nombre des secondes paires de blocs de ressources physiques.

9. Procédé selon la revendication 7, comprenant en outre :
la réception, par l'équipement utilisateur, d'un message de commande de liaison descendante envoyé par la station de base, dans lequel le message de commande de liaison descendante comporte des informations d'instruction de sélection de la TBS correspondant au niveau de plan de modulation et de codage et correspondant au nombre des premières paires de blocs de ressources physiques, ou, de sélection de la TBS correspondant au niveau de plan de modulation de codage et correspondant au nombre des secondes paires de blocs de ressources physiques.

10. Procédé selon l'une quelconque des revendications 7 à 9, dans lequel le facteur de conversion défini comprend un premier facteur de conversion défini correspondant à un premier niveau de plan de modulation et de codage et un second facteur de conversion défini correspondant à un second niveau de plan de modulation et de codage dans la table de tailles de blocs de transport, et le premier facteur de conversion défini est différent du second facteur de conversion défini.

11. Procédé selon la revendication 10, dans lequel le premier niveau de plan de modulation et de codage est un niveau de plan de modulation et de codage maximum dans la table de tailles de blocs de transport ; et le second niveau de plan de modulation et de codage est un niveau de plan de modulation et de codage non maximum dans la table de tailles de blocs de transport.

12. Procédé selon l'une quelconque des revendications 7 à 11, dans lequel si le nombre des secondes paires de blocs de ressources physiques est supérieur au nombre maximum de paires de blocs de ressources physiques de la table de tailles de blocs de transport, la TBS correspondant au niveau de plan de modulation et de codage et correspondant au nombre des secondes paires de blocs de ressources physiques est une TBS correspondant au niveau de plan de modulation et de codage correspondant au nombre maximum des paires de blocs de ressources physiques.

13. Station de base (300), comprenant :
un processeur (31), configuré pour déterminer un niveau de plan de modulation et de codage ; déterminer une ressource temps-fréquence, et déterminer un nombre de premières paires de blocs de ressources physiques conformément à la ressource temps-fréquence ; et sélectionner, à partir d'une table de tailles de blocs de transport, une taille de bloc de transport TBS correspondant au niveau de plan de modulation de codage et
correspondant au nombre des premières paires de blocs de ressources physiques ou à un nombre de secondes paires de blocs de ressources physiques, dans laquelle le nombre des secondes paires de blocs de ressources physiques est un produit du nombre des premières paires de blocs de ressources physiques et d'un facteur de conversion défini ; et
un émetteur (32), configuré pour envoyer des données de service à un équipement utilisateur en adoptant la TBS sélectionnée ; et envoyer un signal de commande de programmation système à l'équipement utilisateur, dans lequel le signal de commande de programmation système comprend le niveau de plan de modulation et de codage et la ressource temps-fréquence;
**caractérisée en ce que** le processeur (31) est configuré en outre pour sélectionner, conformément à une taille de surdébit système, la TBS correspondant au niveau de plan de modulation de codage et correspondant au nombre des premières paires de blocs de ressources physiques, ou, sélectionner la TBS correspondant au niveau de plan de modulation et de codage et correspondant au nombre des secondes paires de blocs de ressources physiques.

14. Station de base selon la revendication 13, dans laquelle l'émetteur (32) est configuré en outre pour envoyer un message de signalisation de couche supérieure à l'équipement utilisateur, dans lequel le message de signalisation de couche supérieure comporte des informations d'instruction de sélection de la TBS correspondant au niveau de plan de modulation et de codage et correspondant au nombre des premières paires de blocs de ressources physiques, ou, de sélection de la TBS correspondant au niveau de plan de modulation de codage et correspondant au nombre des secondes paires de blocs de ressources physiques.

15. Station de base selon la revendication 13, dans laquelle l'émetteur (32) est configuré en outre pour envoyer un message de commande de liaison descendante à l'équipement utilisateur, dans lequel le message de commande de liaison descendante comporte des informations d'instruction de sélection de la TBS correspondant au niveau de plan de modulation et de codage et correspondant au nombre des premières paires de blocs de ressources physiques, ou, de sélection de la TBS correspondant au niveau de plan de modulation de codage et correspondant au nombre des secondes paires de blocs de ressources physiques.

16. Station de base selon l'une quelconque des revendications 13 à 15, dans laquelle le facteur de conversion défini comprend un premier facteur de conversion défini correspondant à un premier niveau de plan de modulation et de codage et un second facteur de conversion défini correspondant à un second niveau de plan de modulation et de codage dans la table de tailles de blocs de transport, et le premier facteur de conversion défini est différent du second facteur de conversion défini.

17. Station de base selon la revendication 16, dans laquelle le premier niveau de plan de modulation et de codage est un niveau de plan de modulation et de codage maximum dans la table de tailles de blocs de transport ; et le second niveau de plan de modulation et de codage est un niveau de plan de modulation et de codage non maximum dans la table de tailles de blocs de transport.

18. Station de base selon l'une quelconque des revendications 13 à 17, dans laquelle le processeur (31) est configuré en outre pour déterminer, quand le nombre des secondes paires de blocs de ressources physiques est supérieur au nombre maximum de paires de blocs de ressources physiques de la table de tailles de blocs de transport, que la TBS correspondant au niveau de plan de modulation et de codage et correspondant au nombre des secondes paires de blocs de ressources physiques est une TBS correspondant au niveau de plan de modulation et de codage correspondant au nombre maximum des paires de blocs de ressources physiques.

19. Equipement utilisateur (400), comprenant :
un récepteur (41), configuré pour recevoir un signal de commande de programmation système envoyé par une station de base, le signal de commande de programmation système comprenant un niveau de plan de modulation et de codage et une ressource temps-fréquence ; et
un processeur (42), configuré pour sélectionner, à partir d'une table de tailles de blocs de transport, une taille de bloc de transport TBS correspondant au niveau de plan de modulation de codage et correspondant au nombre des premières paires de blocs de ressources physiques ou correspondant à un nombre de secondes paires de blocs de ressources physiques, dans lequel le nombre des secondes paires de blocs de ressources physiques est un produit du nombre des premières paires de blocs de ressources physiques et d'un facteur de conversion défini ; et dans lequel le nombre de premières paires de blocs de ressources physiques est déterminé conformément à la ressource temps-fréquence ; et
recevoir des données de service depuis la station de base en adoptant la TBS sélectionnée ;
**caractérisé en ce que** le processeur (42) est configuré en outre pour sélectionner, conformément à une taille de surdébit système, la TBS correspondant au niveau de plan de modulation et de codage et correspondant au nombre des premières paires de blocs de ressources physiques, ou, sélectionner la TBS correspondant au niveau de plan de modulation et de codage et correspondant au nombre des secondes paires de blocs de ressources physiques.

20. Equipement utilisateur selon la revendication 19, dans lequel le récepteur (41) est configuré en outre pour recevoir un message de signalisation de couche supérieure envoyé par la station de base, dans lequel le message de signalisation de couche supérieure comporte des informations d'instruction de sélection de la TBS correspondant au niveau de plan de modulation et de codage et correspondant au nombre des premières paires de blocs de ressources physiques, ou, de sélection de la TBS correspondant au niveau de plan de modulation de codage et correspondant au nombre des secondes paires de blocs de ressources physiques.

21. Equipement utilisateur selon la revendication 19, dans lequel le récepteur (41) est configuré en outre pour recevoir un message de commande de liaison descendante envoyé par la station de base, dans lequel le message de commande de liaison descendante comporte des informations d'instruction de sélection de la TBS correspondant au niveau de plan de modulation et de codage et correspondant au nombre des premières paires de blocs de ressources physiques, ou, de sélection de la TBS correspondant au niveau de plan de modulation de codage et correspondant au nombre des secondes paires de blocs de ressources physiques.

22. Equipement utilisateur selon l'une quelconque des revendications 19 à 21, dans lequel le facteur de conversion défini comprend un premier facteur de conversion défini correspondant à un premier niveau de plan de modulation et de codage et un second facteur de conversion défini correspondant à un second niveau de plan de modulation et de codage dans la table de tailles de blocs de transport, et le premier facteur de conversion défini est différent du second facteur de conversion défini.

23. Equipement utilisateur selon la revendication 22, dans lequel le premier niveau de plan de modulation et de codage est un niveau de plan de modulation et de codage maximum dans la table de tailles de blocs de transport ; et le second niveau de plan de modulation et de codage est un niveau de plan de modulation et de codage non maximum dans la table de tailles de blocs de transport.

24. Equipement utilisateur selon l'une quelconque des revendications 19 à 23, dans lequel le processeur (42) est configuré en outre pour déterminer, quand le nombre des secondes paires de blocs de ressources physiques est supérieur au nombre maximum de paires de blocs de ressources physiques de la table de tailles de blocs de transport, que la TBS correspondant au niveau de plan de modulation et de codage et correspondant au nombre des secondes paires de blocs de ressources physiques est une TBS correspondant au niveau de plan de modulation et de codage correspondant au nombre maximum des paires de blocs de ressources physiques.
